**Europäisches Patentamt**

(19) **European Patent Office**

**Office européen des brevets**

(11) Veröffentlichungsnummer: **0 192 271**
**A2**

# (12) EUROPÄISCHE PATENTANMELDUNG

(21) Anmeldenummer: **86102269.7**

(22) Anmeldetag: **21.02.86**

(51) Int. Cl.⁴: **G 02 B 5/08**
**G 02 B 7/18, F 24 J 2/00**

(30) Priorität: **22.02.85 DE 3506308**

(43) Veröffentlichungstag der Anmeldung:
**27.08.86 Patentblatt 86/35**

(84) Benannte Vertragsstaaten:
**BE CH FR IT LI NL SE**

(71) Anmelder: **European Southern Observatory**
**Karl-Schwarzschild-Strasse 2**
**D-8046 Garching(DE)**

(72) Erfinder: **Mischung, Norbert, Dr.**
**Rathausplatz 17**
**D-8046 Garching(DE)**

(74) Vertreter: **Behrens, Dieter, Dr.-Ing. et al,**
**Patentanwälte WUESTHOFF-V.**
**PECHMANN-BEHRENS-GOETZ Schweigerstrasse 2**
**D-8000 München 90(DE)**

(54) Monolithischer Reflektorkörper eines Spiegelteleskops, Verfahren zur Herstellung des Reflektorkörpers und Vorrichtung zur Durchführung des Verfahrens.

(57) Ein monolithischer Reflektorkörper großer Bauart eines Spiegelteleskops, wird aus einer Vielzahl von nacheinander zusammengesetzten und miteinander verbundenen kleinen Baustoffkörpern oder Einzelelementen hergestellt, die jeweils unter $10^{-4}$ der Masse des monolithischen Reflektorkörpers aufweisen. Die Verbindung kann beispielsweise durch Verschmelzen oder Verschweißen erzeugt werden. Verglichen mit den bisher angewendeten Herstellungsmethoden ist es möglich, u.a. Reflektorkörper für sehr große Spiegelteleskope kosten- und lieferzeitmäßig günstiger, auf einfachere Weise sowie in jeder gewünschten Homogenitätsqualität und in nahezu jeder gewünschten Form auch am Aufstellungsort herzustellen, so daß insbesondere auch Transport- und Aufstellungskosten erheblich reduziert werden.

WUESTHOFF - v. PECHMANN - BEHRENS - GOETZ

EUROPEAN PATENT ATTORNEYS

DR.-ING. FRANZ WUESTHOFF
DR. PHIL. FREDA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING. DIPL.-WIRTSCH.-ING. RUPERT GOETZ

D-8000 MÜNCHEN 90
SCHWEIGERSTRASSE 2

TELEFON: (089) 66 20 51
TELEGRAMM: PROTECTPATENT
TELEX: 5 24 070
TELEFAX: VIA (089) 271 60 63 (III)

EP-60 166
ESO, 8046 Garching

1

## Monolithischer Reflektorkörper eines Spiegelteleskops, Verfahren zur Herstellung des Reflektorkörpers und Vorrichtung zur Durchführung des Verfahrens

Die Erfindung betrifft einen monolithischen Reflektorkörper oder Zellenkörper, insbesondere großer Bauart, eines Spiegelteleskops, wie es insbesondere zum Empfang von kurz-oder langwelligen Strahlen von Himmelskörpern, einschließlich sichtbarem Licht oder Infrarotlicht, verwendet wird sowie ein Verfahren zur Herstellung eines solchen Reflektorkörpers für Großgeräte und eine Vorrichtung zur Durchführung des Verfahrens.

Reflektoren werden eingesetzt in Geräten der Optik, der Energiegewinnung, der Astronomie (einschließlich Radioastronomie) und der Militärtechnik, um direkt oder über weitere reflektierende oder brechende Einrichtungen eine Reflexion und/oder eine Fokussierung von elektromagnetischen Strahlen des sichtbaren und/oder unsichtbaren Wellenlängenbereichs zu erzeugen. Reflektoren können auch dazu verwendet werden, eine im Fokus erzeugte Strahlung zu emittieren.

Geräte der genannten Art werden terrestrisch sowohl stationär als auch instationär in Land-, Wasser- und Luftfahrzeugen, und extraterrestrisch in der Raumfahrt, in Satelliten oder auf Himmelskörpern für eine Vielzahl von wissenschaftlichen, technischen und militärischen Zwecken eingesetzt.

Je nach Aufgabe und Präzisionsanforderung ruhen, insbesondere astronomische, Reflektorkörper mit z.B. Abmessungen über ca. 100 cm Durchmesser auf einem axiale und radiale Kräfte aufnehmenden bspw. nach dem Prinzip der astatischen Hebel arbeitenden Unterstützungssystem. Dieses Unterstützungssystem hat die Aufgabe, Formveränderungen der Reflektorfläche, die bei Bewegung oder Verstellung der Reflektorachsen auftreten können, auszugleichen oder innerhalb bestimmter Grenzwerte zu halten. Das Unterstützungssystem seinerseits wird von einem Zellenkörper getragen.

Reflektorkörper haben im allgemeinen eine plane, sphärische oder asphärische reflektierende Fläche, deren Reflektionsvermögen z.B. durch Aufdampfen von Aluminium, Silber usw. beträchtlich gesteigert werden aknn.

Reflektorkörper haben bevorzugt kreisrunde Form, in Sonderfällen sind sie elliptisch oder haben Polygonform (quadratisch, hexagonal, oktagonal etc.). Die Formen der Zellenkörper sind im allgemeinen den Reflektorkörperkonturen angepaßt.

Je nach Größe und Einsatzzweck sind die Reflektorkörper ihrer Art nach entweder Vollkörper oder Körper mit im allgemeinen regelmäßig geformten und angeordneten Verrippungen und Ausarbeitungen der Unterseite  (US-Patentschrift 4 422 893).

Astronomische Reflektorkörper werden in Sonderfällen auch nach der sogenannten Sandwich-Bauweise hergestellt, teilweise mit einem Stützgerüst aus miteinander verbundenen Glasrohren, auf dessen Unterseite eine Rückenplatte und auf dessen Oberseite eine Spiegelplatte aufgeschmolzen ist (deutsche Offenlegungsschrift 31 16 357).

Reflektorkörper werden aus Glas, glasartigen, keramischen oder metallischen Werkstoffen hergestellt. Sie müssen teilweise an ihrer reflektierenden Fläche zunächst mit einer z.B. optisch polierbaren Schicht ausreichender Härte versehen werden.

Die Präzisionsanforderungen bei der Herstellung der Reflektorkörper richten sich nach dem jeweiligen Einsatzzweck. Ausgehend von der Biegetheorie dünner Platten wird das Festigkeits- und Formänderungsverhalten meist mit der Methode der finiten Elemente berechnet. Wichtige Materialeigenschaften sind dabei die Dichte $\varrho$ , der Elastizitätsmodul E, die Poissonsche Zahl $\nu$ , die spezifische Wärmeausdehnung $\alpha$ , die Temperaturleitzahl a, die Härte H. Für einige dieser Materialeigenschaften, z.B. und H, werden enge Toleranzen für die erlaubten Schwankungen gefordert. Die Konstanz dieser Materialeigenschaften in allen Teilen des Reflektorkörpers, die sogenannte Homogenität, wird sehr wesentlich von dem gewählten Herstellungsverfahren beeinflußt.

Unzulässige Herstellungs- und/oder langzeitbedingte Formänderungen größerer Reflektorkörper und deren reflektierender Fläche können während der Betriebszeit des Geräts innerhalb gewissen Grenzen durch eine sogenannte "aktive Optik" korrigiert werden. Hierunter vesteht man ein computergesteuertes Bildkorrektursystem, welches die Güte der Abbildungsqualität analysiert und durch mehrfache Iteration optimiert.

Die Herstellung der Reflektorkörper wird heute im allgemeinen wie folgt durchgeführt:

a) Herstellung des rohen Reflektorkörpers;

b) Bevorzugt spanabhebende Weiterbearbeitung der unter
   a) erzeugten Reflektorflächenform- und -rauhigkeit;

c) Erzeugung einer Schicht ausreichender Härte und Tiefe auf
   der unter b) bearbeiteten Reflektorfläche durch Beschichtung
   mit einem geeigneten Material;

d) Endbearbeitung der Reflektorfläche durch Schleifen und
   Polieren innerhalb der unter c) erzeugten Schicht.

Der Herstellungsschritt c) kann entfallen, wenn das Reflektorkörpermaterial an sich bereits die für die Ausführbarkeit von
d) erforderliche Härte aufweist, wie etwa Glas oder ein direkt
polierbares Metall.

Die Erfindung befaßt sich mit der Ausbildung und Herstellung
monolithischer Reflektorkörper einschließlich Zellenkörper
insbesondere großer Bauart.

Die größten, bis etwa zur Mitte des 19. Jahrhunderts gefertigten Reflektorkörper waren Spiegel bis ca. 1,85 m Durchmesser
für astronomische Fernrohre aus Spekulum, einer polierbaren
Kupferbronze, deren Anlaufen und Trübwerden längerfristig nicht
zu unterbinden war. Die Erfindung des Verfahrens zum chemischen
Versilbern von Glas führte dann zum Einsatz von Glas und
keramischen Werkstoffen als Reflektorkörpermaterial. Die
Weiterentwicklung der Gießtechnik dieser Werkstoffe ermöglichte
dann die Erzeugung immer größerer monolithischer
Reflektorkörper (größter heutiger Teleskopspiegel: ca. 6 m
Durchmesser, Gewicht ca. 80 t, Material: Glassorte
"Borosilikat").

Die aus Glas- oder Keramikmaterial durch Gießen erzeugten
Reflektorkörper dieser Größe und Massen benötigen wegen der
niedrigen Temperaturleitzahl solcher Materialien eine über
Jahre sich hinziehende Auskühlzeit. Sie sind fertigungs- und transport-technisch risikoreich und sehr teuer in der Anschaffung.

Glas oder keramische Materialien sind nahezu vollkommen elastisch bis zum Eintreten des Bruchs. Die aus ihnen gefertigten Reflektorkörper haben eine sehr gute Formstabilität. Die Durchbiegungen von Reflektorkörpern mit niedriger Wärmeleitfähigkeit und signifikanter oder vernachlässigbarer linearer Wärmeausdehnung können mittels "aktiver Optik" korrigiert werden. Aber auch unter Anwendung dieser Korrekturmöglichkeit hat die hohe thermische Trägheit dieser Materialien nachteilige Wirkungen, welche durch den Reflektorkörper umgebenden Luftmassen bedingt sind.

Die genannten Nachteile der aus Glas- oder Keramikmaterial hergestellten Reflektorkörper führten in jüngerer Zeit wieder dazu, metallische Werkstoffe in Betracht zu ziehen wegen ihrer im Vergleich zu Glas/Keramik um ca. zwei Größenordnungen höheren Temperaturleitzahl. Der hohe technische Stand in der Metallverarbeitung und die verfügbaren Verarbeitungsanlagen zur Herstellung großer metallischer Einrichtungen für Kerntechnik, Chemie, Schiffbau usw. führten seit den 60-er Jahren zur Produktion von bevorzugt für astronomische und militärische Zwecke eingesetzten Metallspiegeln in Vollkörper- oder Rippenbauart bis zu ca. 1,85 m Durchmesser aus Materialien wie z.B. Beryllium und Aluminium bzw. deren Legierungen. Diese Spiegel wurden überwiegend aus gegossenen oder geschmiedeten Werkstoffen, in Ausnahmefällen auch durch Verschweißen von gegossenen Segmenten hergestellt.

In einigen Fällen wurden Reflektorkörper für Sonnensimulatoren bis zu 7 m Durchmesser durch Verschweißen von 50 mm dicken gewalzten Aluminiumblechen erzeugt. Verglichen beispielsweise mit Reflektorkörper für astronomische Zwecke sind die otpischen Präzisionsanforderungen für Sonnensimulatoren außerst niedrig.

Daher wirken sich bei ihrem Betrieb die beispielsweise bei
Bauteilen aus Aluminium oder Aluminiumlegierungen bekannten
zeitabhängigen Formänderungen, das sogenannte "Warping", nicht
nachteilig aus. Das Warpingverhalten von metallischen Reflektorkörpern mit hoher Präzisionsanforderung ist kaum zu berechnen,
kann aber durch geeignete Wahl des Werkstoffes und des Herstellungsverfahrens sowie durch Einsatz der korrigierend wirkenden
"aktiven Optik" innerhalb geforderter Grenzen gehalten werden.

Ausgehend von der Beherrschbarkeit des Warpingeffektes und vom
günstigen thermischen Verhalten von metallischen Reflektorkörpern, vom hohen technischen Stand der Metallverarbeitung sowie
erwarteten günstigeren Preisen und Lieferzeiten gegenüber
Reflektorkörpern vergleichbarer Größe aus Glas oder Keramik
wird derzeit die Herstellung eines Vollkörper-Metallspiegels
von 3,58 m Durchmesser, 240 mm Dicke und 6 t Gewicht aus
Aluminium oder einer Aluminiumlegierung für den Einsatz in
einem neuen, mit "aktiver Optik" ausgerüsteten Teleskop der
European Southern Observatory, Garching b. M. (New Technology
Telescope, NTT) geplant. Bei Realisierung wäre dies wohl der
größte und schwerste Reflektorkörper für ein astronomisches
Spiegelteleskop.

Wegen des Bedürfnisses, die Lichtstärke und das Auflösungsvermögen von astronomischen Spiegelteleskopen zu erhöhen, werden
von mehreren Arbeitsgruppen auf der Welt sogenannte VLT (Very
Large Telescope) Projekte bearbeitet, die man zum Teil innerhalb der nächsten 10 Jahre zu realisieren hofft. Es wird der
Einsatz von Spiegeln bis zu 16 m Durchmesser erwogen, mit einem
geschätzten Gewicht bis ca. 200 t. Für VLT-Projekte fernerer
Zukunft wird bereits an Spiegeln von 25 und mehr m Durchmesser
gedacht (vgl. Zeitschrift "Bild der Wissenschaft", Heft 9,
1984, Seite 142, 143). Es wäre - insbesondere für Beobachtungen
im Infrarotlichtbereich - wünschenswert, solche Reflektorkörper
als Monolithe herzustellen, d.h. die gesamte Reflektorfläche nicht in Untereinheiten oder Teilspiegel aufteilen zu müssen,
wie dies bisher geplant ist. Die Aufteilung der einem Spiegel
von 16 m Durchmesser entsprechenden Gesamtfläche auf Teilflächen
wird überwiegend nur deshalb erwogen, weil man bei Anwendung
der bisher benutzten Herstellungsverfahren keine technischen
und preislich vertretbaren Möglichkeiten sieht, monolithische
Reflektorkörper solcher Abmessungen herzustellen. Auch die
Herstellung von monolithischen Spiegelkörpern der 8 m Klasse
ist - sowohl in Glas/Keramik als auch in Metall - noch praktisch ungelöst, ebenso die Folgeprobleme beim Transport und bei
der Montage.

Die Herstellungsverfahren aus Glas/Keramik-Material mit bis
heute erzeugter maximaler Abmessung von ca. 6 m Durchmesser
beginnen mit der Rohkörpererzeugung durch Gießen, wobei das in
Öfen ausreichender Gesamtkapazität erschmolzene Material in mit
z.B. Keramik ausgekleideten Gießformen abgegossen wird. Oder
die Herstellung erfolgt durch Erschmelzen in der Gießform. Die
in Schmelzöfen erzeugten Chargen werden dabei zunächst in
Masseln abgegossen. Mit dem vollständig abgekühlten Material
wird dann die Gießform gefüllt. Dieser Reflektor-Rohkörper wird
anschließend durch Erschmelzen des Materials innerhalb der Form
erzeugt, wobei die Form entweder direkt elektrisch oder in
einem Ofen erwärmt wird. Im Anschluß daran wird der Rohkörper
einem Temperungsprozeß unterzogen, welcher sich samt nachfolgender Abkühlung über 10 und mehr Monate hinziehen kann. Der so
behandelte Rohkörper wird zunächst mittels üblicher Werkzeugmaschinen bearbeitet und erhält seine endgültige Reflektorflächenform durch Schleifen und Polieren. Der fertige
Reflektorkörper wird schließlich zum Aufstellungsort des
Gerätes transportiert und dort eingebaut.

Bei Reflektorkörpern für VLT-Projekte basieren die für die
Rohkörpererzeugung, -behandlung und -bearbeitung erwogenen
Fertigungsverfahren auf den gleichen Technologien. So wird beispielsweise an einem Verfahren für die Rohkörpererzeugung gearbeitet, wobei insbesondere die Erzeugung der gewünschten Homogenität bei gerippten Reflektorkörperkonstruktionen technische Probleme verursacht, die man dadurch zu lösen versucht, daß man die gesamte Gußform in Rotation versetzt.

Es existieren somit bewährte, allerdings teuere und langwierige Verfahren, nach denen monolithische Reflektorkörper aus Glas/-Keramik-Material bis ca. 6 m Durchmesser hergestellt werden können. Bei Einsatz der gleichen heute angewandten Technologien zur Herstellung von monolithischen Reflektorflächen für VLT-Projekte sind technische Probleme auf folgenden Gebieten zu erwarten bzw. zu lösen:

a)     Verfügbarmachung bzw. Schaffung von Schmelz- und Temper-
       öfen sowie von Werkzeugmaschinen ausreichender Kapazität
       bzw. Größe;

b)     Erzielbarkeit der gewünschten Rohkörperqualität, insbesondere der Homogenität

c)     Transport und Einbau.

Aus diesen Gründen ist zu erwarten, daß die Herstellung von monolithischen Reflektorkörpern aus Glas/Keramik-Material für VLT-Projekte unter Anwendung bisher genutzter Technologien mit überproportional zu den Abmessungen ansteigenden Kosten, Lieferzeiten und Risiken verbunden ist.

Monolithische, aus Kunststoff erzeugte Reflektorkörper hoher Präzisionsanforderungen sind - soweit bekannt - bisher nicht hergestellt worden. Die für Glas/Keramik bzw. Metalle beschriebenen Technologien können bedingt angewendet werden. Das Warpingverhalten und die erzielbare Homogenität von Reflektorkörpern aus Kusntstoffen, wie z.B: Faserverbundwerkstoffen, sind nicht genügend bekannt.

Soweit bekannt, werden für monolithische Zellenkörper
ausschließlich metallische Werkstoffe verwendet. Die meist
topfähnlichen Gebilde werden für Spiegelteleskope der
Durchmesserklasse 5 bis 6 m überwiegend aus gewalzten Blechen
verschweißt, geglüht und spanabhebend mechanisch
fertigbearbeitet. Nach der gleichen Technologie und unter
Verwendung vorhandener technischer Einrichtungen können
grundsätzlich auch Zellenkörper bis ca. 8 m Durchmesser
hergestellt werden. Der Transport von Zellenkörpern solcher
Abmessungen erfordert aber einen beträchtlichen technischen
Aufwand. Daher würden Zellenkörper von 8 und mehr m Durchmesser
zweckmäßigerweise aus Segmenten herzustellen sein, welche auf
der Baustelle verschweißt werden. Die mit dem Ausrichten der
Segmente und dem gegebenenfalls notwendigen Glühen der
Baustellennähte oder des ganzen Zellenkörpers verbundenen
Arbeiten geben aus technischen und wirtschaftlichen Erwägungen
Veranlassung, auch Zellenkörper über ca. 8 m Durchmesser nach
anderen Verfahren herzustellen.

Aufgabe der Erfindung ist es, einen monolithischen Reflektorkörper, aber auch einen monolithischen Zellenkörper, großer
Bauart, für Spiegelteleskope der VLT-Klasse zur Verfügung zu
stellen, die kostengünstig auf einfache Weise und mit einfachen
Mitteln in nahezu jeder gewünschten Form und Homogenitätsqualität auch am Aufstellungsort, herstellbar sind, so daß auch
Transport- und Aufstellungskosten erheblich reduziert werden,
wobei der erzeugte monolithische Reflektorkörper ein solcher
ist, der also nicht aus einzelnen mechanisch verbundenen, z.B.
miteinander verschraubten, Einzelteilen besteht.

Ferner sollen ein Verfahren und eine Vorrichtung zur Herstellung eines solchen monolithischen Reflektorkörpers großer
Bauart geschaffen werden.

Ein diese Aufgabe lösender Reflektor- bzw. Zellenkörper insbesondere für astronomische Zwecke, aus einer Vielzahl von miteinander starr verbundenen Baustoffkörpern ist erfindungsgemäß gekennzeichnet durch eine Vielzahl nacheinander zusammengesetzter kleiner Baustoffkörper, deren Masse jeweils weniger als $10^{-4}$, insbesondere weniger als $10^{-6}$, des monolithischen Reflektorkörpers mißt. Ausgestaltungen sind in Unteransprüchen gekennzeichnet.

Ein Verfahren und eine Vorrichtung zur Herstellung des erfindungsgemäßen Bauteilkörpers, insbesondere für den Reflektorkörper eines Spiegelteleskops, sind in weiteren Unteransprüchen gekenzeichet.

Nach der Erfindung können monolithische Reflektorkörper und Zellenkörper großer Bauart für insbesondere astronomische Spiegelteleskope günstig hergestellt werden. Es werden die erforderlichen Homogenitätsqualitäten der Reflektorkörper ohne besonderen Aufwand gewährleistet, die mit den bekannten angewandten Technologien nicht immer befriedigend erzielbar sind. Ferner sind keine Körpergrenzgrößen gegeben. Der technische und finanzielle Aufwand insbesondere für die Herstellung von Reflektorkörpern großer Abmessungen ist relativ gering. Zusätzliche Einrichtungen sind nicht erforderlich, um monolithische Reflektorkörper der VLT-Klasse (8 bis 16 m Durchmesser) zu transportieren und zu montieren. An die Herstellung des Reflektorkörpers schließt sich die Endbearbeitung, beispielsweise die optische Bearbeitung der Reflektorfläche, in bekannter Weise an.

Die Erfindung ermöglicht es, monolithische Reflektorkörper der VLT-Klasse in der erforderlichen Homogenitätsqualität an jedem gewünschten terrestrischen oder extraterrestrischen Ort einfacher, schneller und kostengünstiger als nach den eingangs beschriebenen Methoden herzustellen.

Die Erfindung ermöglicht unter denselben Bedingungen auch die
Herstellung von anderen Bauteilkörpern oder deren Teile für
Großgeräte.

Nach der bekannten Technologie werden die genannten monolithischen Körper aus ausreichend großen monolithischen Materialblöcken bzw. aus möglichst wenigen und möglichst großen monolithischen Segmenten hergestellt. Demgegenüber werden die genannten Körper nach dem erfindungsgemäßen Verfahren aus einer
großen Vielzahl von beliebig kleinen zweckmäßig geformten
Einzelelementen hergestellt, welche in einem für die jeweilige
Verarbeitung des gewählten Materials zweckmäßigen Aggregatzustand mit oder ohne Verformung der Einzelelemente nacheinander
so miteinander verbunden werden, daß schließlich der gewünschte
monolithische feste Körper entsteht.

Je nach dem für die Einzelelemente und deren Material gewählten
Verbindungsverfahren kann die untere Grenzgröße der Einzelelemente bis in den Mikronbereich herunterreichen (z.B. Sprühen),
während ihre obere makroskopische Grenzgröße im wesentlichen
nur durch ihre verbindungsverfahrensbedingte Verarbeitbarkeit
bestimmt wird. Diese obere Grenzgröße eines Elements, welches
in den Körperverband als vorgefertigtes Teilstück eingebaut
wird, überschreitet massenmäßig nicht die angegebenen Werte.
Nach der Erfindung werden die Baustoffkörper bzw. Einzelelemente nacheinander in den Bauteilkörper eingebaut.

Die Einzelelemente können vor und/oder während ihrer Verbindung
jede beliebige geometrische Form haben bzw. annehmen. Die
Einzelelemente können vor und/oder während des Verbindungsprozesses aus zweckmäßig dimensionierten Vormaterialteilen kontinuierlich oder diskontinuierlich erzeugt werden. Je nach dem
gewählten Verbindungsverfahren kann es auch zweckmäßig sein,
Einzelelemente zu einem Element-Verbundsystem bestimmter Form
und Größe vorzufertigen und danach die erzeugten Verbundsysteme nacheinander so miteinander zu verbinden, daß der gewünschte
feste monolithische Körper entsteht.

Die Verbindung der Einzelelemente bzw. der vorgefertigten Elementverbundsysteme zum herzustellenden Körper erfolgt in für
das gewählte Material geeigneten kontinuierlichen oder diskontinuierlichen physikalischen oder chemischen Prozessen, beispielsweise durch Plattieren oder Versintern oder Verschmelzen,
Umschmelzen oder Verlöten oder Verschweißen, Auftragschweißen,
Formschweißen, Schweißplattieren oder Aufsprühen.
Die für einige der genannten Prozesse erforderlichen Energien
werden dabei bevorzugt über geeignete Verbrennungsgase, elektrische Energie oder Sonnenenergie zugeführt, wobei zur Erzeugung erforderlicher hoher Energiedichten insbesondere auch die
Lasertechnik einsetzbar ist.

Das erfindungsgemäße Verfahren bietet eine kaum abzugrenzende
Vielfalt und Flexibilität bei der Herstellung.

Das erfindungsgemäße Herstellungsverfahren ist grundsätzlich
anwendbar für alle Materialarten. Ein Reflektorkörper kann aus
Einzelelementen bzw. Elementverbundsystemen gleicher oder unterschiedlicher Materialart hergestellt werden. Es ist also
beispielsweise möglich, die Rippen bzw. Sandwichlagen eines
Reflektorkörpers und insbesondere die reflektierende Fläche aus
unterschiedlichen Materialarten herzustellen. Für ein und
dieselbe Materialart können in ein und demselben Reflektorkörper auch unterschiedliche Verbindungsverfahren zur Anwendung
kommen.

Es kann ein Reflektorkörper, insbesondere großer Abmessung und
Masse, sowie beliebiger Form und Bauart hergestellt werden.
Darüber hinaus ist es möglich, in den Reflektorkörper gesonderte technische Systeme einzubauen, wie z.B. ein Rohrschlangensystem oder Zuganker.

Bedingt durch die nacheinander erfolgende Verbindung der Einzelelemente bzw. der Elementsysteme kann eine eventuelle material- oder verbindungsverfahrensbedingte Behandlung beispielsweise thermischer Art während des Verbindungsvorgangs selbst oder im Anschluß daran in lokal auf etwa die Elementgröße oder wenige Elementgrößen begrenztem Umfang durchgeführt werden, so daß sich eine entsprechende Behandlung des vollständig fertiggestellten Bauteilkörpers als ganzes erübrigt, weil durch die Erfindung die gewünschte Homogenität des Reflektorkörpers im allgemeinen ganz von alleine erzielt wird. Sie entsteht dadurch, daß Inhomogenitäten, welche bedingt sind durch Materialqualitätsunterschiede innerhalb eines einzelnen Baustoffkörpers bzw. Einzelelements oder zwischen den einzelnen Baustoffkörpern gleicher Ausgangsmaterialqualität einerseits und durch die nacheinander erfolgende Verbindung der einzelnen Baustoffkörper andererseits, die Homogenitätsqualität des Reflektorkörpers umsomehr erhöhen, je größer die Anzahl und je kleiner die Größe der Baustoffkörper ist. Größe, Form und Anzahl der Baustoffkörper sowie das Verbindungsverfahren sind nach der Erfindung im Hinblick auf die gewünschte Homogenitätsqualität des Reflektorkörpers in optimal abgestimmter Weise einstellbar. Es ist aber erforderlichenfalls ohne weiteres möglich, den Bauteilkörper als ganzes, z.B. thermisch, zu behandeln gegebenenfalls auch ohne die Notwendigkeit, ihn zu diesem Zweck zu einer Glühanlage zu transportieren.

Durch Anpassung der Größe der Einzelelemente in den obersten Lagen der reflektierenden Fläche sowie durch Wahl geeigneter Verbindungsverfahren, z.B. Umschmelzen, Verschmelzen, Versprühen, elektrolytisches Beschichten, kann sich eine vor der Endbearbeitung der reflektierenden Fläche erforderliche spanabhebende Bearbeitung der reflektierenden Fläche erübrigen. Letztere kann aber erforderlichenfalls durchgeführt werden ohne die Notwendigkeit, den Körper zu einer Werkzeugmaschine transportieren zu müssen.

Entfallen kann aber eine mittels großer Werkzeugmaschinenanlagen durchzuführende umfassende spanabhebende Bearbeitung der gesamten übrigen Oberflächen des Reflektorkörpers und insbesondere die spanabhebende Ausarbeitung von Rippenstrukturen.

Unmittelbar nach Einbindung eines Einzelelements oder Elementsystems in den Verbund des Reflektorkörpers kann die Beschaffenheit jedes Elements und die Qualität der Verbindung entweder visuell oder durch spezielle Methoden (beispielsweise mittels Farbeindringverfahren, Ultraschall, Röntgen) geprüft und eventuell vorhandene Fehlstellen repariert werden, bevor weitere Einzelelemente eingebunden werden.

Für die Einbindung der Elemente bzw. Elementsysteme in den Reflektorkörper werden an der Einbindungsstelle je nach Verbindungsverfahren unterschiedliche Vorrichtungen und Werkzeuge benötigt, deren gemeinsames wesentliches Merkmal darin besteht, daß sie relativ kleine Abmessungen und Massen haben. Bei einem etwa erforderlichen Übergang auf ein anderes Verbindungsverfahren kann daher ein Wechseln der Vorrichtung und Werkzeuge einfach und schnell erfolgen.

Eine Vielzahl der bereits aufgeführten Verbindungsverfahren kann mittels der geeigneten Werkzeuge und Vorrichtungen manuell ausgeführt werden und es ist bei entsprechend großen Reflektorkörperabmessungen möglich, unter Anwendung gleicher oder unterschiedlicher Verbindungsverfahren, in mehreren Reflektorkörperbereichen manuell oder maschinell parallel zu arbeiten.

Für die Herstellung besonders großer Reflektorkörper ist es möglich und zweckmäßig, maschinell kontinuierlich durchführbare Verbindungsverfahren zu wählen. Die erforderlichen Werkzeuge und Vorrichtungen sind dann an einer bevorzugt in der Achse des Reflektorkörpers anzuordnenden Maschine anzubringen, welche die Werkzeuge und Vorrichtungen steuert und mit der jeweils erforderlichen Geschwindigkeit führt. Durch Auswechselbarkeit der zweckmäßigerweise als Einheitenmodule verfügbaren Werkzeuge und Vorrichtungen ist ein- und dieselbe Maschine für eine Vielzahl von Verbindungsverfahren universell einsetzbar. Die zerlegbare, leicht auf- und abbaubare, an jedem beliebigen Ort aufstellbare Maschine kann - mit entsprechenden Werkzeugen und Vorrichtungen versehen - auch für die Ausführung von spanabhebenden Bearbeitungen und für andere Arbeitsgänge, z.B. für lokal durchzuführende thermische Behandlungen, für Oberflächenhärtung etwa mittels Lasertechnik, für Prüf- und Meßzwecke sowie gegebenenfalls für die Feinstbearbeitung der reflektierenden Fläche eingesetzt werden.

Durch geeignete Wahl der Größe und Form der Einzelelemente bzw. der Elementsysteme, des Verbindungsverfahrens und dessen Prozeßsteuerung sowie durch die Möglichkeit der frühzeitigen Auffindung und Reparatur von Fehlstellen, kann in jedem Reflektorkörperteilbereich und damit für den gesamten Reflektorkörper jede gewünschte Homogenitätsqualität erzeugt werden.

Ein erfindungsgemäßer Reflektorkörper kann praktisch an jedem terrestrischen oder extraterrestrischen Ort hergestellt werden, sofern das gewählte Verfahren zur Verbindung der Einzelteile dort durchführbar ist. Insbesondere ist es auch möglich, einen Reflektorkörper im zugehörigen Gerät selbst, also beispielsweise in einem Teleskop, herzustellen.

Ein außerhalb seines zugehörigen Gerätes nach dem erfindungsgemäßen Verfahren herzustellender Reflektorkörper kann auch durch Kombination des erfindungsgemäßen Verfahrens mit einigen heute angewandten Verfahrensschritten erzeugt werden. Als Beispiele seien genannt die Möglichkeit der Rohkörperformgebung durch Pressen oder durch spanabhebende Bearbeitung sowie die Möglichkeit einer z.B. thermischen Behandlung des Rohkörpers als ganzes in den jeweils geeigneten Einrichtungen.

Die Reflektor- oder Zellenkörperherstellung nach dem erfindungsgemäßen Verfahren bietet gegenüber dem heutigen Stand der
Technik insbesondere folgende Vorteile:

Flexibilität bei der Herstellung der Körper durch Einsatzmöglichkeit einer Vielzahl von V.rbindungsverfahren für die Einzelelemente.

Anwendbarkeit erprobter, für die jeweilige Materialart und für
die zu verarbeitenden Elementgrößen leicht optimierbarer
Verbindungsverfahren. Dadurch bedingt technisch problemlose
Verarbeitbarkeit einer Vielzahl von Materialarten, insbesondere
von metallischen Werkstoffen.

Modulare Verwendbarkeit der Arbeitsgeräte für die Herstellung
einer Vielzahl von Körpern.

Herstellbarkeit monolithischer Körper jeder Form und Bauart und
Möglichkeit des Einsetzens von gesonderten technischen Systemen
beliebiger Form und Bauart in jede beliebige Stelle des Körpers
ohne Beeinträchtigung der Homogenitätsqualität.

Herstellbarkeit der Körper an jedem gewünschten terrestrischen
oder extraterrestrischen Ort, insbesondere auch im zugehörigen
Gerät (Spiegelteleskop) selbst. Dadurch bedingt Wegfall der
Handhabung, des Transports und der Montage von großen massereichen fertigen Körpern.

Auffindbarkeit und Reparaturmöglichkeit von Fabrikationsfehlern
während der Herstellung der Körper.

Möglichkeit der Erzeugung beliebig hoher Homogenitätsqualitäten
in jedem beliebigen Teilbereich des herzustellenden Körpers
sowie Erzeugbarkeit eines Körpers hoher gleichmäßiger Homogenitätsqualität.

Massenerzeugbarkeit der zu verarbeitenden Baustoffkörper oder -systeme in gleichbleibender Form und Materialqualität.

Wegfall der Notwendigkeit der Erzeugung, Behandlung, Bearbeitung und Handhabung von Halbzeugteilen großer Abmessungen und Massen.

Wegfall der Notwendigkeit der Entwicklung und des Baues von Großanlagen für Erzeugung, Behandlung, Bearbeitung und Transport von Halbzeugteilen großer Abmessungen und Massen.

Wegfall von Zeitzwängen während der gesamten Fabrikation, weil jeder Schritt im Herstellungsvorgang jederzeit problem- und risikolos unterbrochen und neu begonnen werden kann.

Technisch risikolose Herstellbarkeit des Reflektorkörpers.

Möglichkeit einer sehr genauen Gewichtsbestimmung des erzeugten Körpers durch Aufsummierung der Gewichte aller einzubauenden Baustoffkörper.

Jederzeitige Prüfmöglichkeit der Funktion eines Reflektorkörpers im Zusammenwirken mit den anderen Einrichtungen des Geräts im Gerät selbst.

Geringe Investitionskosten.

Kurze Herstellzeiten der Körper.

Anhand der Zeichnung wird die Erfindung beispielhaft näher erläutert, in dem die Herstellung eins Reflektorkörpers beschrieben wird. Es zeigen:

Fig. 1      den prinzipiellen Aufbau eines Newtonschen
            Spiegelteleskops mit erfindungsgemäß herstellbarem
            Reflektorkörper,

Fig. 2a    bis d schematisch verschiedene Reflektorkörperformen,
           die nach dem erfindungsgemäßen Verfahren herstellbar
           sind,

Fig. 3     im Querschnitt einen Reflektorkörper mit einer
           zentralen Öffnung und im Innern angeordneten
           Rohrschlangensystem,

Fig. 4     schematisch eine Draufsicht auf einen Reflektorkörper
           mit im Innern angeordneten Rohrschlangensystem,

Fig. 5     schematisch eine Seitenansicht einer Vorrichtung zur
           Erzeugung eines erfindungsgemäßen Reflektorkörpers,

Fig. 6a    bis d blockschematisch und perspektivisch
           Arbeitseinheiten der Vorrichtung zur Erzeugung eines
           erfindungsgemäßen Reflektorkörpers,

Fig. 7a,   b schematisch im Querschnitt einen Betonblockkörper
           als Hilfsvorrichtung für die Herstellung eines
           erfindungsgemäßen Reflektorkörpers,

Fig. 8     schematisch im Querschnitt eine Abhebevorrichtung aus
           Stahl als Hilfsvorrichtung für die Herstellung eines
           erfindungsgemäßen Reflektorkörpers,

Fig. 9     einen zylindrischen Rohrabschnitt aus Stahlblech als
           weitere Hilfsvorrichtung für die Herstellung eines
           erfindungsgemäßen Reflektorkörpers,

Fig. 10a,  b, c, d schematisch den Herstellungsvorgang für einen
           erfindungsgemäßen Reflektorkörper,

Fig. 11    schematisch den Aufbau eines 20 m Spiegelteleskops
(ohne Tubus dargestellt),

Fig. 12    schematisch eine Vorrichtung zur Herstellung des
Reflektorkörpers,

Fig. 13    schematisch eine andere Vorrichtung zur Herstellung
des Reflektorkörpers,

Fig. 14    schematisch Verfahrensschritte zur Herstellung des
Reflektorkörpers,

Fig. 15    das Detail A in Fig. 14,

Fig. 16a, b, c, d die Verippungsstruktur des Reflektorkörpers,

Fig. 16e   das Rohrschlangensystem des Reflektorkörpers,

Fig. 17    schematisch eine Draufsicht auf den Reflektor mit
angekreuzten Stellen für die Montageunterstützung,

Fig. 18    Hilfsmittel zur Erzeugung der Rippenelemente des
Reflektorkörpers,

Fig. 19    andere Hilfsmittel für die Erzeugung der
Rippenelemente des Reflektorkörpers,

Fig. 20    ausgestanzte Metallplättchen für die Erzeugung des
Rippenkörpers sowie bereits zu einem Rippenkörperteil
verschmolzene Metallplättchen,

Fig. 21    Metallplättchen, welche als Aufbauunterlage zur
Erzeugung der Reflektorkörper-Deckplatte dienen, und

Fig. 22    eine Vorrichtung zur extraterrestrischen Herstellung
eines Reflektorkörpers.

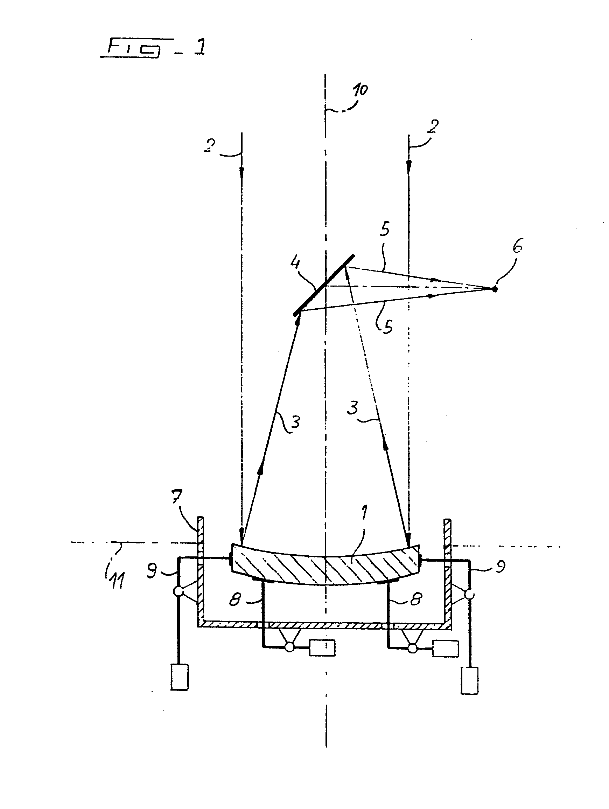

Ein in Fig. 1 schematisch abgebildetes Newtonsches Spiegelteleskop weist einen meniskusförmigen Reflektorkörper 1 auf, auf
den die Lichtstrahlen in Pfeilrichtung 2 auftreffen und in
Pfeilrichtung 3 zu einer oberhalb des Reflektorkörpers 1
angeordneten weiteren reflektierenden Einrichtung 4 gelenkt
werden. Von der reflektierenden Einrichtung 4 werden die
Strahlen in Pfeilrichtung 5 zum Fokus 6 geworfen. Der Reflektorkörper 1 lagert in einem Zellenkörper 7. Astatische Hebel 8 zur
axialen Reflektorunterstützung und astatische Hebel 9 zur
radialen Reflektorunterstützung greifen am Reflektorkörper 1 an
und stellen Teile des (hier nicht weiter gezeigten) "aktiv-optisch"
gesteuerten Unterstützungssystems dar. Die Hebel 8 und 9 sind
in Widerlagern am Zellenkörper 7 angeordnet. Das Teleskop ist
um die vertikale Achse 10 und um die horizontale Achse 11
gelagert.

Beispielsweise können der Reflektorkörper 1 und/oder der
Zellenkörper 7 oder die reflektierende Einrichtung 4 erfindungsgemäß hergestellt sein.

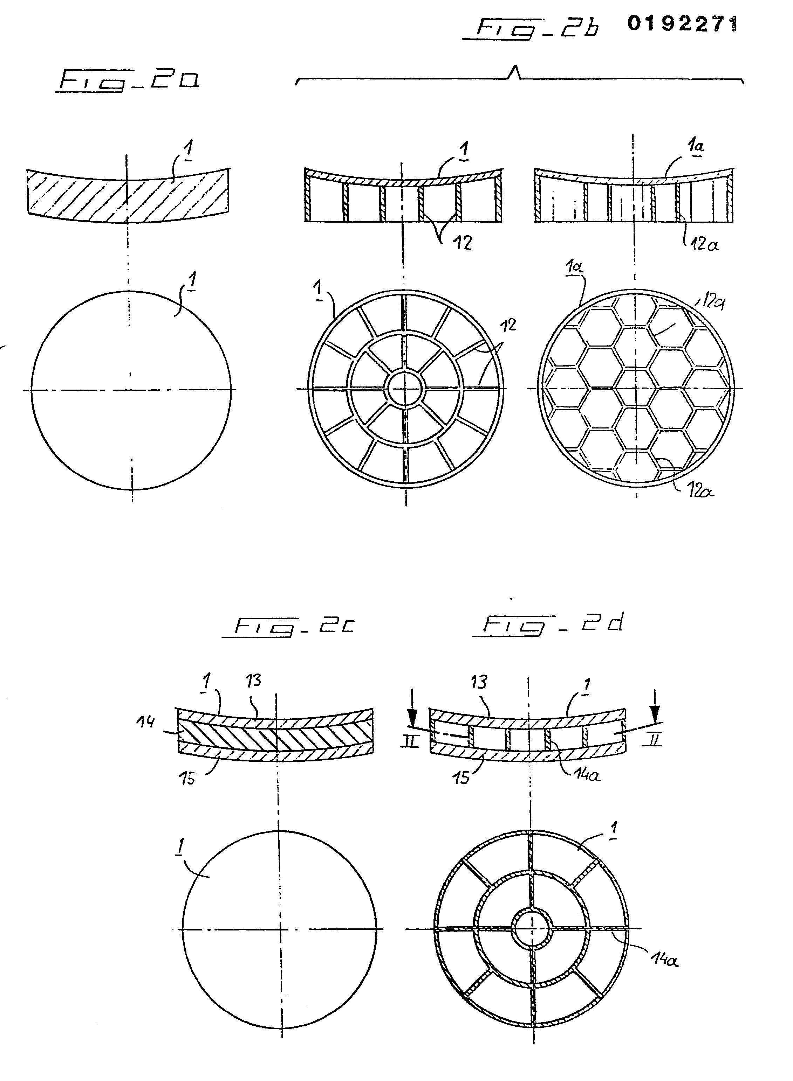

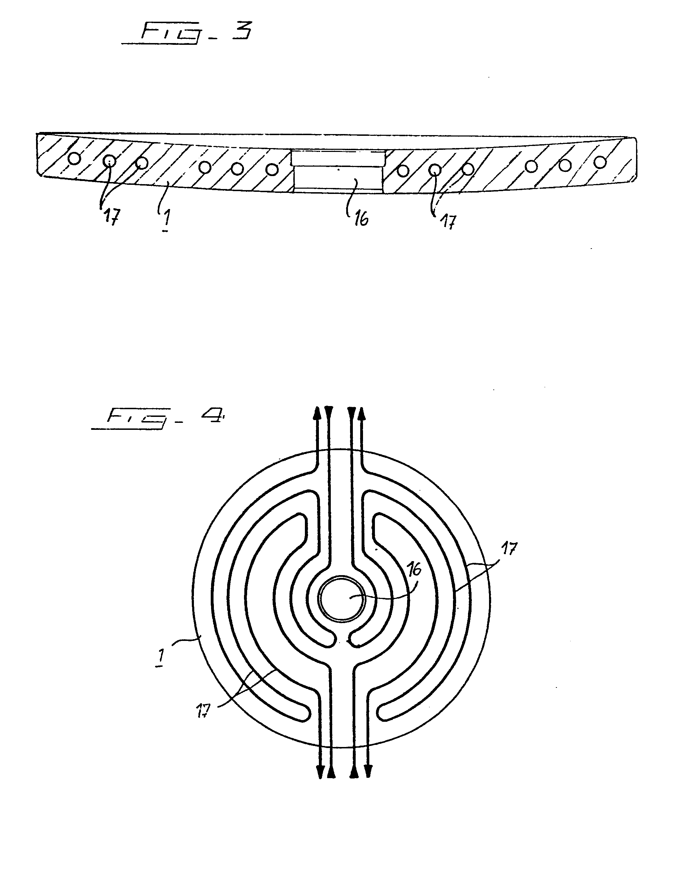

Fig. 2a bis d verdeutlichen Konturen von Reflektorkörpern 1 aus
Metall, die nach der Erfindung besonders leicht herstellbar
sind. Fig. 2a oben zeigt einen Reflektorkörper 1 als Vollkörper
von der Seite sowie darunter eine Unteransicht des Körpers;
Fig. 2b zeigt einen Reflektorkörper 1, 1a mit einer Rippung 12,
12a unteschiedlicher Struktur an der Unterseite des Körpers;
Fig. 2c zeigt einen Reflektorkörper 1 in Sandwichbauweise mit
den übereinander angeordneten Schichten 13, 14 und 15; Fig. 2d
zeigt einen Reflektorkörper 1 in Sandwichbauweise mit einem
Rippen-Stützgerüst 14a zwischen einer Spiegelplatte 13 und
einer Rückenplatte 15, wobei die untere Abbildung der Fig. 2d
eine Draufsicht mit Blickrichtung in Pfeilrichtung auf den
entlang der Schnittlinie II-II geschnittenen, in der oberen
Abbildung gezeigten Reflektorkörper 1 darstellt.

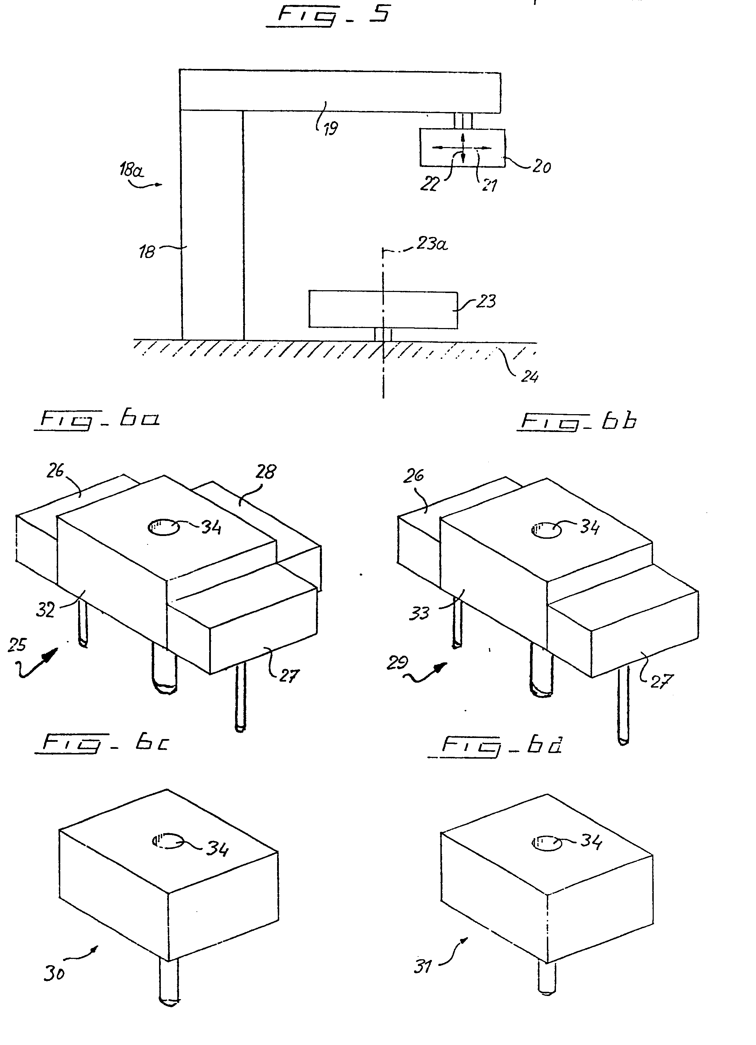

Der Reflektorkörper 1 gemäß Fig. 3 weist eine zentrale Öffnung
16 auf. Im Reflektorkörper sind Rohrschlangen 17 angeordnet,
die zu einem Temperiersystem gehören (nicht dargestellt). Durch
die Rohrschlangen 17 kann ein Kühl- oder Heizmedium geleitet
werden.

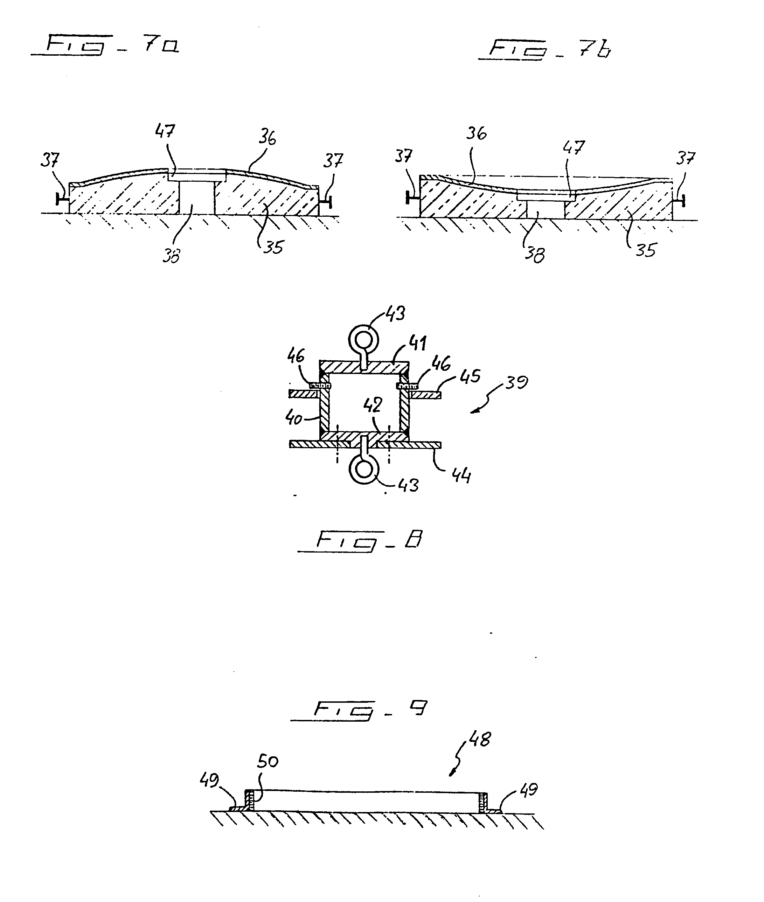

Der in den Fig. 3 und 4 abgebildete Reflektorkörper 1 aus einer
Aluminiumlegierung kann einen Durchmesser von 3580 mm, eine
Dicke von 240 mm und ein Gewicht von etwa 6000 kg aufweisen.

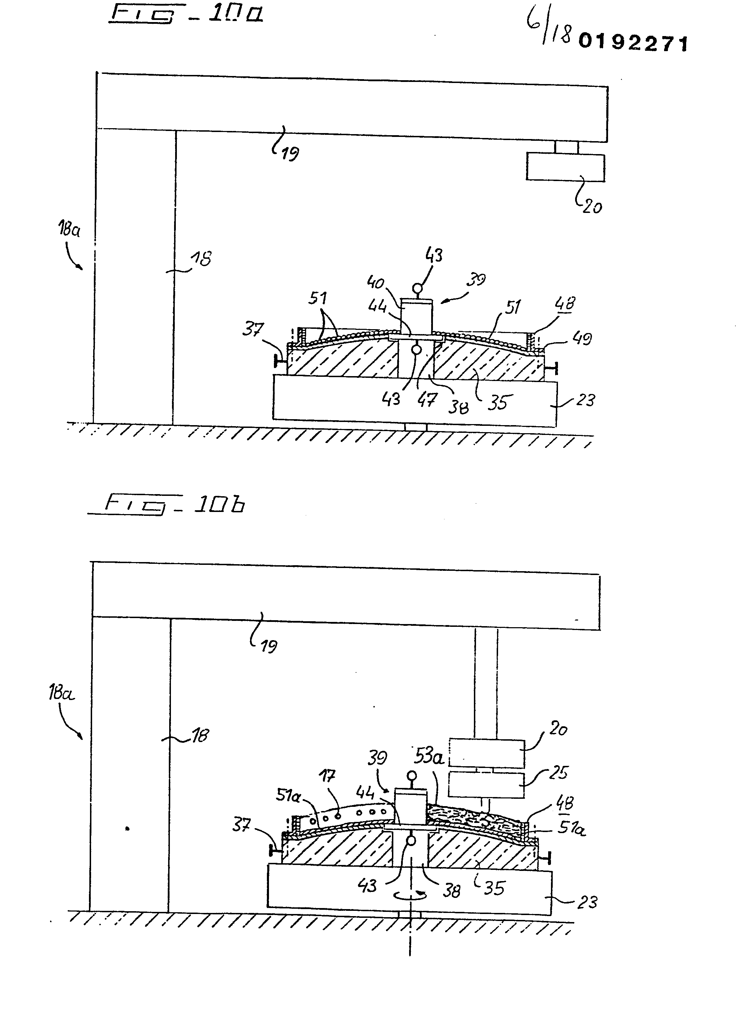

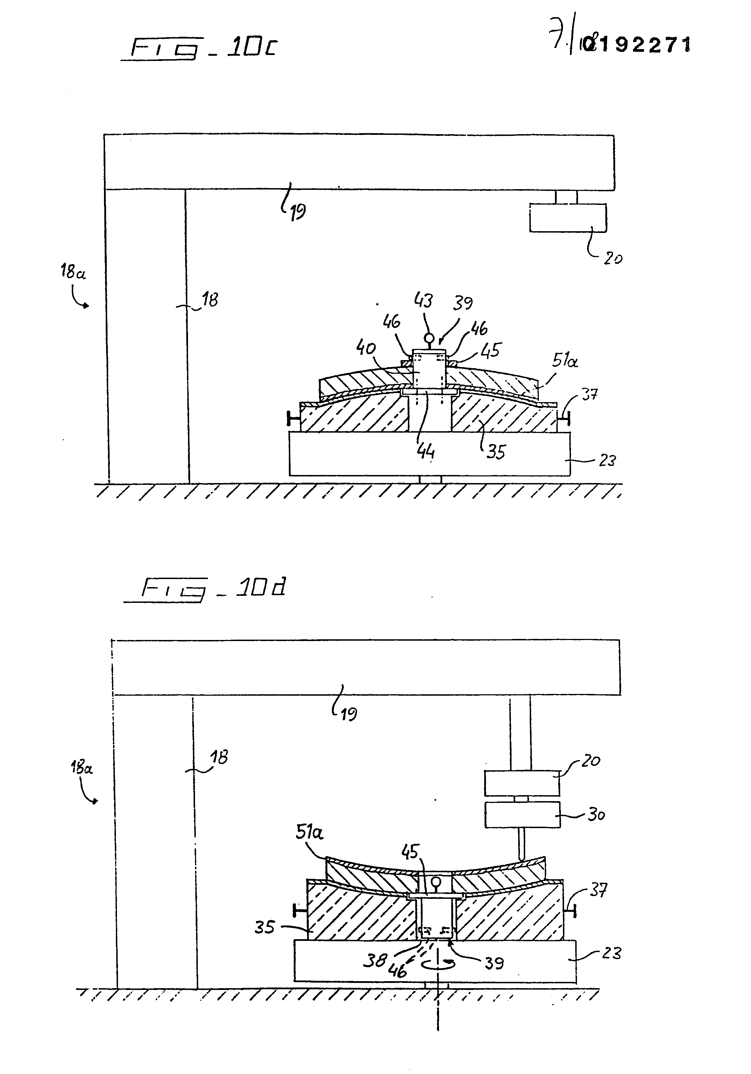

Der Reflektorkörper 1 wird außerhalb des Teleskops hergestellt,
und zwar mit einer Vorrichung 18a nach Art einer Karusseldrehbank, die in Fig. 5 abgebildet ist. Diese Vorrichtung 18a weist
im wesentlichen einen auf einem Fundament 24 ruhenden, aufrechtstehenden Ständer 18 und einen daran lagernden, im wesentlichen
horizontal ausgerichteten Kragarm 19 auf. Unter dem Kragarm 19
sitzt ein Werkzeughalter 20, der stufenlos NC-gesteuert in
Pfeilrichtung 21 und 22 radial bzw. axial auf- und abverfahrbar
ist. Im Bereich unter dem Kragarm 19 lagert auf dem Fundament
24 eine Drehscheibe 23, auf der ein Reflektorkörper nach der
Erfindung gebildet werden soll, und die um die vertikale Achse
23a drehbar angeordnet ist.

An dem Werkzeughalter 20 können verschiedene Arbeitseinheiten
(Moduli) auswechselbar befestigt werden, mit denen die Arbeiten
zur Erzeugung des Reflektorkörpers 1 verrichtet werden können.

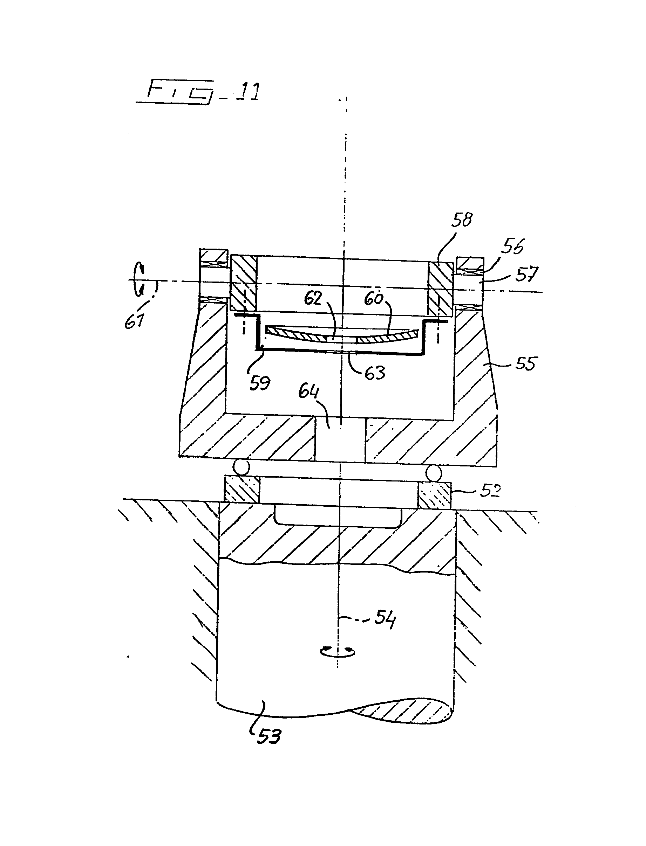

In Fig. 6a bis d sind blockschematisch und perspektivisch
solche Arbeitseinheiten dargestellt. Fig. 6a zeigt eine Auftragsschweißeinheit 25 (Modul 1), die einen Auftragsschweißautomaten
32, eine Vorwärmvorrichtung 26, eine Nachwärmvorrichtung 27 und
einen Schweißmaterialvorratsbehälter 28 umfaßt. Fig. 6b zeigt
eine Umschmelzeinheit 29 (Modul 2), umfassend einen Umschmelzautomaten 33, eine Vorwärmvorrichtung 26 und eine Nachwärmvorrichtung 27. Fig. 6c zeigt eine Dreheinheit 30 (Modul 3), mit
der spanabhebenden Dreh- oder Bohrarbeiten durchgeführt werden können. Fig. 6d stellt eine Fräseinheit 31 (Modul 4) dar, mit der Fräsarbeiten ausgeführt werden können. Mit der jeweiligen Kopplungsvorrichtung 34 können die Moduli 1 bis 4 am Werkzeughalter 20 befestigt werden, wobei die Moduli 1 und 2 um eine vertikale Achse um 90° schwenkbar sind.

Mit der beschriebenen Vorrichtung 18a kann für eine vorgegebene Kontur eines Reflektorkörpers die dazugehörige rotationssymmetrische Fläche übergangsfrei erzeugt werden. Die Vorrichtung 18a verfügt außerdem über Einrichtungen zur Gewährleistung stufenlos regelbarer Drehzahlen der Drehscheibe 23 in der WEise, daß über alle Radien konstante Bearbeitungsgeschwindigkeiten einstellbar sind.

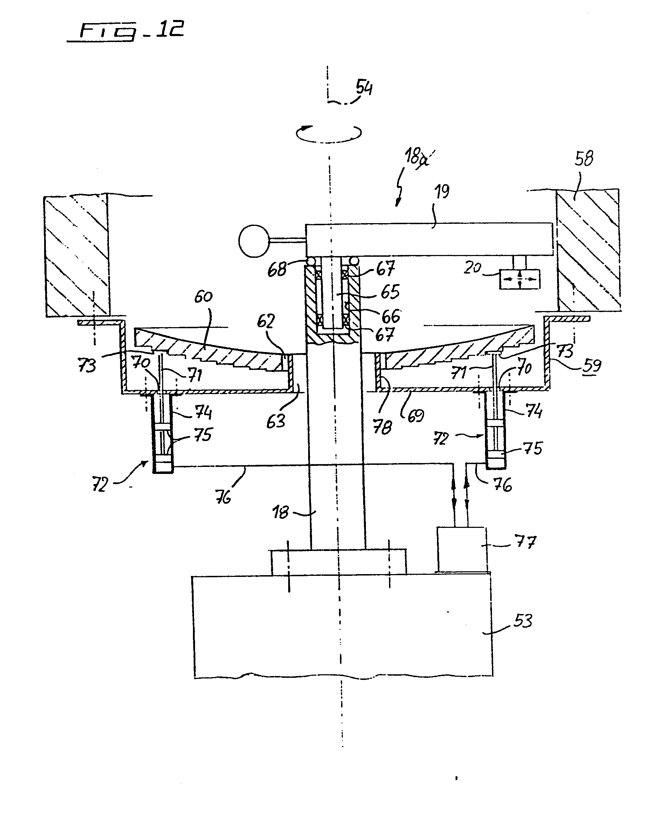

Als Hilfsgeräte zur Herstellung des erfindungsgemäßen Reflektorkörpers können Vorrichtungen dienen, die in den Fig. 7a, b, 8 und 9 schematisch dargestellt sind. Die Fig. 7a, b zeigen jeweils einen Betonblockkörper 35 mit einer oberen Feinschicht 36 z.B. aus Mörtel, die in der Vorrichtung 18a mit dem Modul 3 feingedreht worden ist. Die obere Feinschicht 36 nach Fig. 7a ist konvex und die der Fig. 7b konkav gekrümmt; diese Flächen dienen zur Aufnahme der Reflektorkörperoberseite (konvexe Wölbung) bzw. der Reflektorkörperunterseite (konkave Wölbung). An den Seitenflächen des Betonblockkörpers 35 sind zweckmäßigerweise für den Transport Hebeknaggen 37 befestigt. An der Feinschicht 36 kann außerdem noch eine Asbestlage oder dgl. wärmeisolierenden Schicht angeordnet sein.

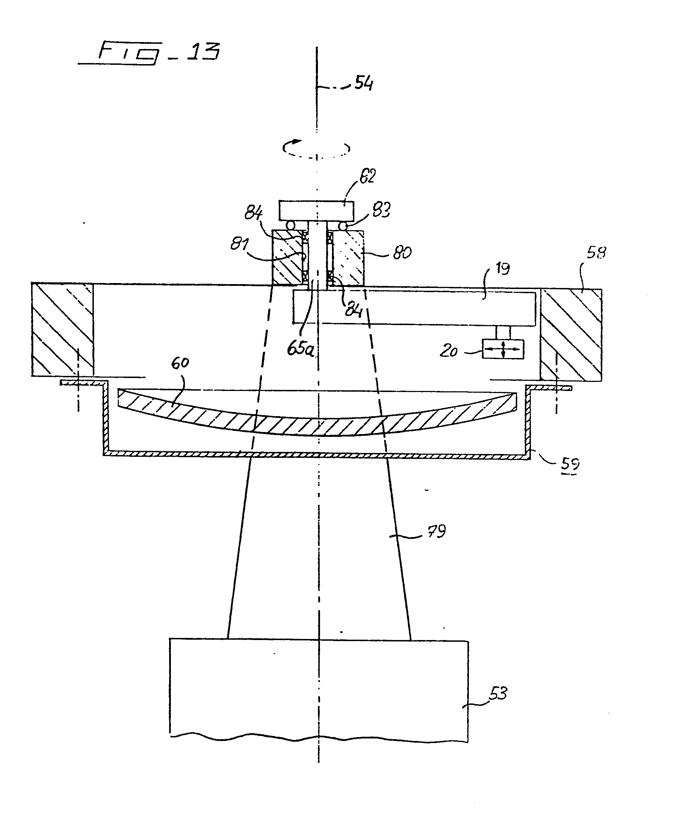

Der Betonblockkörper 35 weist außerdem noch eine zentrale Öffnung 38 auf. In die Öffnung 38 kann eine Abhebevorrichtung 39 gemäß Fig. 8 etwa formschlüssig eingesetzt werden, mit der der Reflektorkörper 1 transportierbar ist. Die Abhebevorrichtung 39 besteht aus einem zentralen Rohrstück 40 mit angeschweißten Deckeln 41, 42, in die nach außen stehende Hebeösen 43 eingeschraubt sind. Auf den Deckel 42 ist eine Flanschplatte 44 mit Schrauben befestigt, während im Bereich des Deckels 41 formschlüssig über das Rohrstück 40 ein loser Flansch 45 geschoben
ist, der nach oben hin gegen radial in die Wandung des Rohrstücks
49 einschraubbare Bolzen 46 stoßen kann. Die Abhebevorrichtung
39 wird mit ihrer Flanschplatte 44 in eine im Bereich der
freien Oberfläche des Betonblockkörpers 35 angeordnete ringförmige, die Öffnung 38 umgebende Ausnehmung 47 des Betonblockkörpers 35 gesetzt, so daß das Rohrstück 40 nach oben ragt.

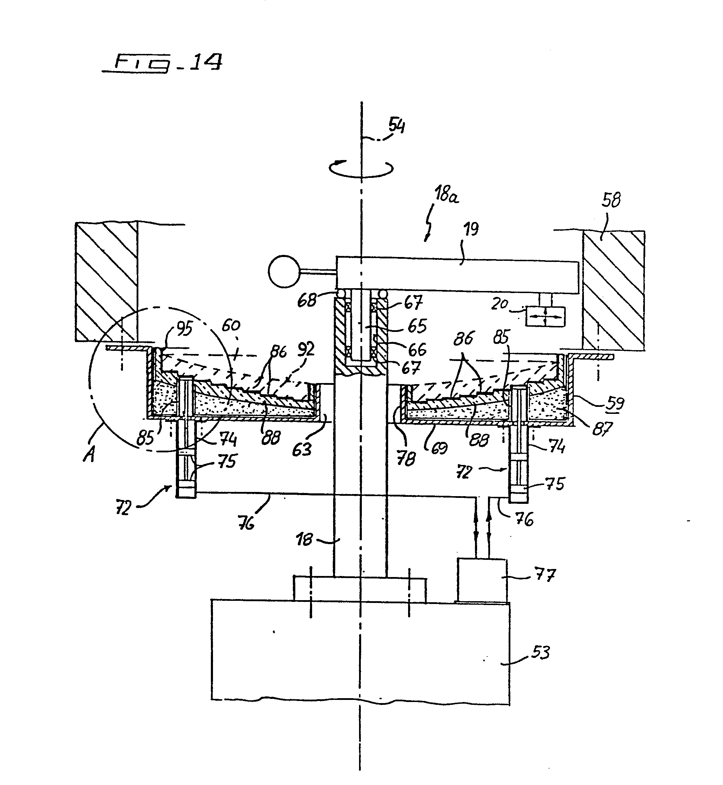

Als weiter Hilfsvorrichtung zur Herstellung des Reflektorkörpers 1 als Vollkörper dient ein zylindrisches Rohrstück 48 aus
Stahlblech gemäß Fig. 9 mit verschraubbarem, nach außen stehendem Rand 49. Auf der Innenseite des zylindrischen Teils des
Rohrstücks 48 ist zweckmäßigerweise eine Asbestschicht 50 oder
dgl. wärmeisolierende Schicht angeordnet. Der Innendurchmesser
des Rohrstücks 48 entspricht näherungsweise dem Außendurchmesser des zu erzeugenden Reflektorkörpers 1.

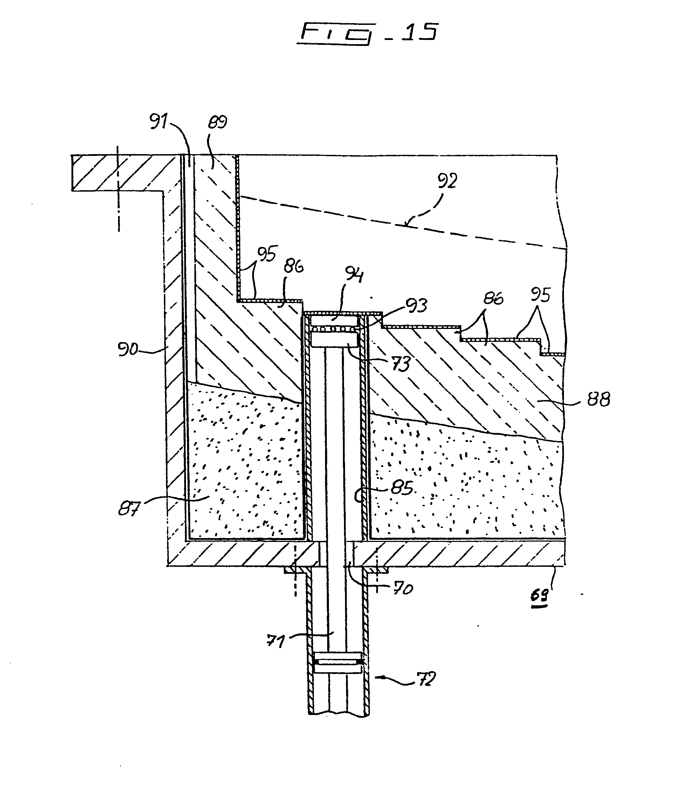

Die Fig. 10a bis d verdeutlichen die Herstellung eines erfindungsgemäßen Reflektorkörpers 1 aus einer Aluminiumlegierung.
Gemäß Fig. 10a wird die Fertigungsanlage aufgebaut für die
Erzeugung des erfindungsgemäßen Reflektorkörpers mittels
Auftragsschweißen und Umschmelzen, indem auf die Drehscheibe 23
der Vorrichtung 18a der runde Betonblockkörper 35 gemäß Fig. 7a
mit konvexer Krümmung gesetzt wird, in dessen Ausnehmung 47 die
Aushebevorrichtung 39 mit ihrer Flanschplatte 44 lagert und
nach oben den Betonblockkörper 35 überragt. Auf die Oberfläche
des Betonblockkörpers 35 im Bereich seiner Peripherie ist das
Rohrstück 48 mit seinem Rand 49 zentral um das Rohrstück 40 der
Abhebevorrichtung 39 geschraubt.

Zur Herstellung des Reflektorkörpers 1 als Vollkörper wird
zunächst die derart gebildete Bodenfläche auf dem Betonblockkörper 35 mit einer Latge Aluminiumkugeln 51 belegt. Mitels der
Umschmelzeinheit 29 (Modul 2) wird die Kugellage umgeschmolzen zu einer Aluminiumschicht 51a mit einer Dicke von 2,5 bis 3 mm, die als Aufbauunterlage für eine Auftragsschweißung dient. Der Reflektor-Rohkörper mit einer Dicke von etwa 260 mm wird anschließend durch Auftragen von aus 6 mm Durchmesser Drahtmaterial kontinuierlich erzeugten Auftragsschweißlagen 53a mittels der Auftragsschweißeinheit (Modul 1) gefertigt (Fig. 10b). Während dieser Fertigung kann auf Bindefehler und Risse geprüft und etwaige Reparaturen von Fehlstellen durchgeführt werden. Außerdem können vorgefertigte Rohrsysteme aufgelegt und eingeschweißt werden. Spannungen in angrenzenden Bereichen werden durch einen Nachwärmprozeß reduziert. Ein weiterer Spannungsabbau erfolgt durch die mit der Verlegung von benachbarten Lagen verbundenen Einwirkung von Vor- und Nachwärmvorgängen.

Mit der Umschmelzeinheit 29 wird die oberste Auftragsschweißlage umgeschmolzen und es erfolgt dann eine spanabhebende Fertigbearbeitung der zukünftigen Spiegelunterseite durch Dreharbeit mit der Dreheinheit 30 und Fräsarbeit mit der Fräseinheit 31 für Vertiefungen zur Aufnahme der Angriffseinrichtungen der astatischen Hebel 8 für die Teleskopspiegel-Unterstützungen.

Danach wird das zylindrische Rohrstück 48 entfernt und der lose Flansch 45 über das andere Rohrstück 40 gestülpt und die Haltebolzen 46 eingeschraubt (Fig. 10c). Danach erfolgt ein Umsetzen des Reflektor-Rohkörpers auf einen in Fig. 7b abgebildeten Betonblockkörper, der zusammen mit dem Reflektor-Rohkörper auf die Drehscheibe 23 gesetzt wird (Fig. 10d). Beim Umsetzen des rohen Reflektorkörpers ist die Abhebevorrichtung 39 benutzt worden, wobei die Hebeösen 43 mit Hebewerkzeugen einer Hebevorrichtung zusammenwirkten (nicht dargestellt). Es erfolgt das Entfernen der Flanschplatte 44 und Absenken der Abhebevorrichtung 39 in die Öffnung 38 des Betonblockkörpers 35. Danach wird die Aluminiumschicht 51a mit der Dreheinheit 30 abgedreht und die reflektierende Fläche des Reflektorkörpers sowie die

0192271

Zentralbohrung und die zylindrische Mantelfläche spanabhebend fertig bearbeitet.

Der Reflektorkörper kann nunmehr entweder auf dem Betonblock 35 oder mittels der Abhebevorrichtung 39 zu weiteren Bearbeitungsstätten (optische Werkstatt, Oberflächenbeschichtung) transportiert werden.

Für etwaige vor oder während der Weiterbeabeitung erforderliche thermische Behandlungen des Reflektor-Rohkörpers kann der Betonblockkörper 35 als Unterstützungsplatte verwendet werden, wenn die Asbestschicht 50 des Betonblockkörpers mit einem geeigneten Gleitmittel oder mit einer Lage aus kleinen Hartmetallkugeln belegt wird.

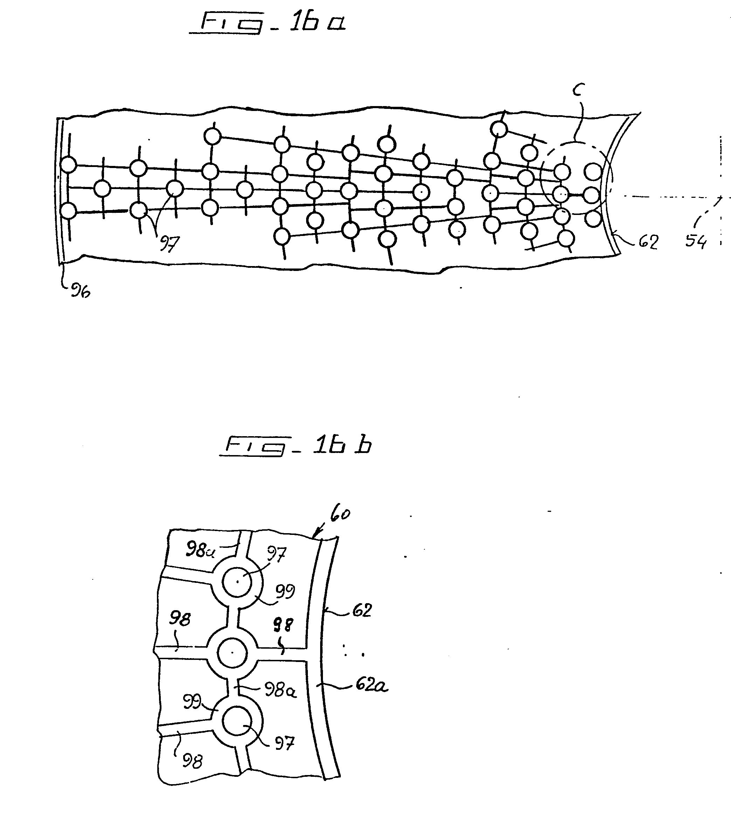

Anhand des in Fig. 11 schematisch ohne Tubus dargeatellten 20 m Spiegelteleskops wird eine weitere Verfahrensvariante der Erfindung zur Herstellung eines Spiegelkörpers beschrieben.

Fig. 11 zeigt ein ringförmiges Azimutlager 52, das auf einem Teleskopsockel 53 ruht. Auf dem Azimutlager 52 lagert z.B. auf Rollen eine um eine vertikale Drehachse 54 drehbare Gabel 55. Die Gabel 55 bildet ein Lager 56 für die um horizontale Schwenkachse 61 schwenkbare Deklinationsachse 57 eines Zentralringkörpers 58. An der Unterfläche des Zentralringkörpers 58 ist ein Zellenkörper 59 befestigt. Im Zellenkörper 59 lagert der Reflektorkörper 60. In der Mitte des Reflektorkörpers, des Zentralringkörpers und der Gabel ist jeweils eine axiale Öffnung 62, 63, 64 vorgesehen.

Der Reflektorkörper 60 ist monolithisch ausgebildet und meniskusförmig und ruht im Zellenkörper 59 auf etwa 1100 aktiv-optisch gesteuerten Stützen. Der Reflektorkörper60 ist aus niedrig legiertem C-Stahl aufgebaut, hat einen Durchmesser von 20 m und eine Gesamtdicke vom 800 mm. Er weist eine geripste Unterseite

sowie ein in die obere Deckplatte eingebautes Rohrsystem auf.
Das Gewicht des Reflektorkörpers beträgt etwa 500.000 kg.

Die Herstellung des Reflektorkörpers erfolgt zweckmäßigerweise
im Zellenkörper 59 in situ, d.h. das Azimutlager 52, die Gabel
55, der Zentralringkörper 58 und der Zellenkörper 59 sind
fertiggestellt und bereits montiert. Als Arbeitsverfahren
werden bei diesem Beispiel erfindungsgemäß das Auftragsschweißen
und das Verschmelzen verwendet.

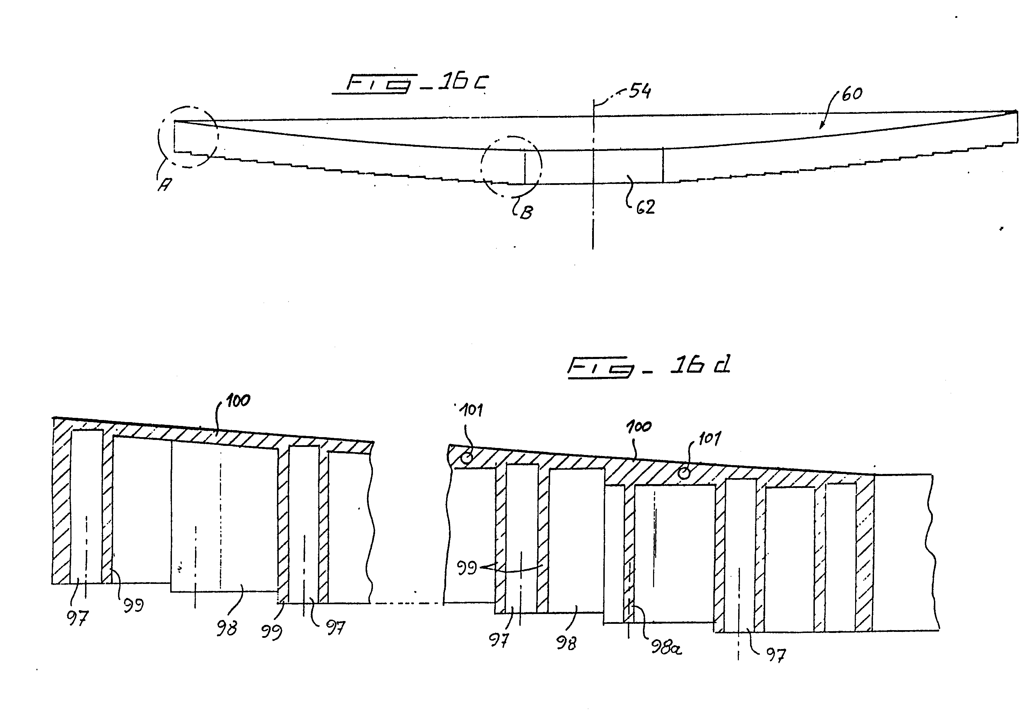

Aus der Fig. 12 ergibt sich eine besonders günstige Anordnung
zur Herstellung des Spiegelkörpers in situ.

Auf dem Teleskopsockel 53 steht eine Vorrichtung 18a nach Art
eines Bohrwerks, die der in Fig. 5 abgebildeten entspricht. Ihr
Ständer 18 durchgreift frei die Öffnung 64, 63, 62 (s. Fig.
11) und ragt in den Zentralringkörper 58, der nur teilweise
angedeutet gezeichnet ist. In der Fig. 12 ist die Gabel 55
nicht gezeichnet, um die Übersichtlichkeit nicht zu stören. Am
oberen Ende des Ständers 18 ist um die vertikale Drehachse 54
drehbar der sich horizontal erstreckende Kragarm 19 angeordnet.
Die Drehung bewirkt ein nicht dargestellter Motor. Für die
Gewährleistung der Drehung ist vorgesehen, daß ein vertikal
sich erstreckender Drehzapfen 65 in einer entsprechenden
Aufnahme 66 des Ständers 18 in Kugellagern 67 steckt, wobei der
Kragarm auf der Oberfläche des Ständers durch Kugel- oder
Rollenlager 68 abgestützt ist. Der Kragarm 19 trägt einen
Werkzeughalter 20, der mit den in Fig. 6a bis d abgebildeten
Arbeitseinheiten (Moduli 1 bis 4) bestückt werden kann.

Nach einer besonderen Ausführungsform der Erfindung sind im
Boden 69 des Zellenkörpers 59 Löcher 70 vorgesehen, die jeweils
von einer Kolbenstange 71 einer Hydraulikstempel-Einheit 72
durchgriffen werden. Am oberen Ende der Kolbenstange 71 sitzt
eine Platte 73, deren Funktion weiter unten beschrieben wird.

Die Hydraulikstempel-Einheit 72 weist den Zylinder 74 mit mindestens einem Kolben 75 auf. Der Zylinder ist mit Schrauben von unten an den Boden 69 des Zellenkörpers 59 geschraubt oder in gleichwirkender Weise befestigt. Die Hydraulik-Einheiten 72 stehen über Hydraulikleitungen 76 mit einem Hydrauliksatz 77 in Verbindung. Der Hydrauliksatz betreibt die Hydraulikstempel-Einheiten 72 in an sich bekannter Weise.

Für die weiter unten beschriebene Herstellung des Reflektorkörpers 60 ist zweckmäßig, wenn die Öffnung 63 im Zellenkörper 59 mit einer axial sich vom Boden 69 nach oben erstreckenden Ringwandung 78 versehen ist.

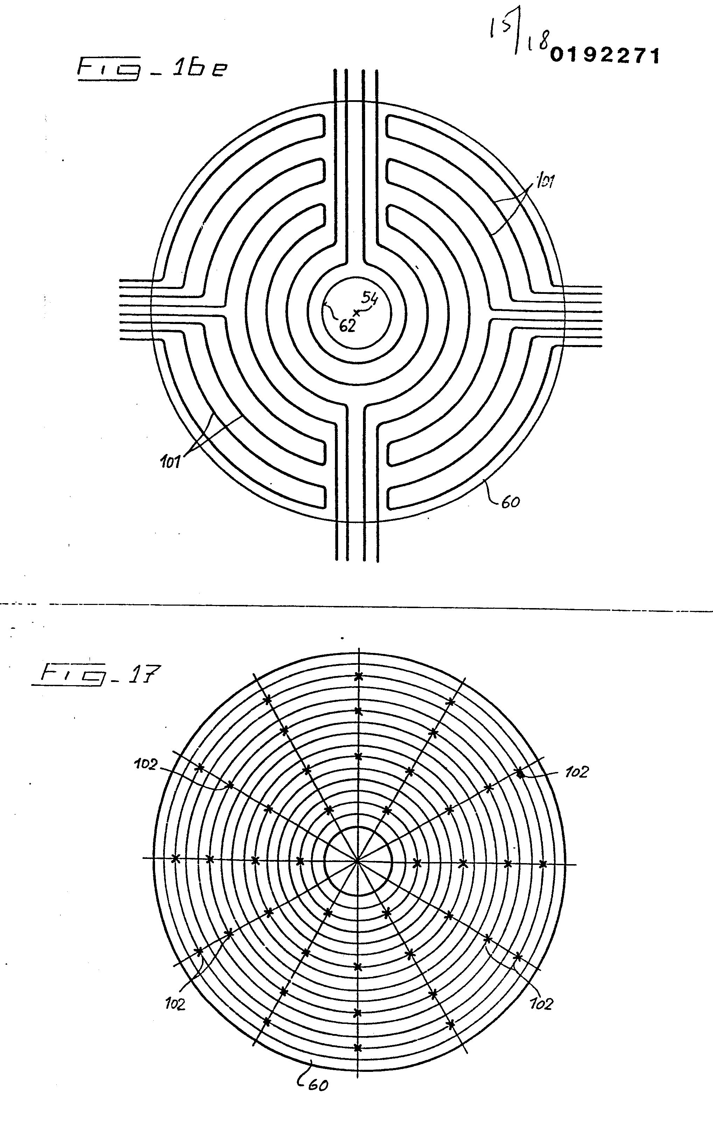

Nach einer Weiterbildung der beschriebenen Vorrichtung kann auf dem Ständer 18 ein weiterer Kragarm ruhen, der sich in die entgegengesetzte Richtung zum Kragarm 19 erstreckt und ebenfalls einen Werkzeughalter 20 trägt. Sofern Reflektorkörper 60 ohne zentrale Öffnung in situ hergestellt werden sollen, ist nach einer weiteren Ausführungsform der Erfindung vorgesehen, eine Brücke über dem Zentralringkörper 58 zu errichten und am horizontalen Steg der Brücke den Kragarm 19 zu lagern. Diese Ausführungsform ist in Fig. 13 schematisch dargestellt. Die Brückenpfeiler 79 ruhen auf dem Teleskopsockel 53. Im horizontalen Brückensteg 80 steckt der Drehzapfen 65a des Kragarms 19 und durchgreift eine Öffnung 81. Am oberen, aus der Öffnung 81 ragenden Ende des Drehzapfens 65a sitzt eine rotierende Zentraleinheit 82, die sich mit einem Rollen- oder Kugellager 83 auf der Oberfläche des Brückenstegs 80 abstützt. In der Öffnung 81 ist der Drehzalpfen 65a durch Kugel- oder Rollenlager 84 gegen die Wandung der Öffnung 81 abgestützt. Der Antriebsmotor ist nicht abgebildet.

Die Kragarmlängen können durch Einsetzen von Teilstücken den maximalen Abmessungen des herzustellenden Spiegelkörpers angepaßt werden. Im Bedarfsfall können der oder die Kragarme auch auf dem Rand des Zellenkörpers abgestützt geführt werden.
Die Vorrichtung 18a ist koaxial mit der Azimutachse des Teleskops auf dem Teleskopsockel montiert. Mit den Hydraulikstempel-
Einheiten 72 soll der fertige Reflektorkörper in vertikaler
Richtung angehoben und abgesetzt werden können.

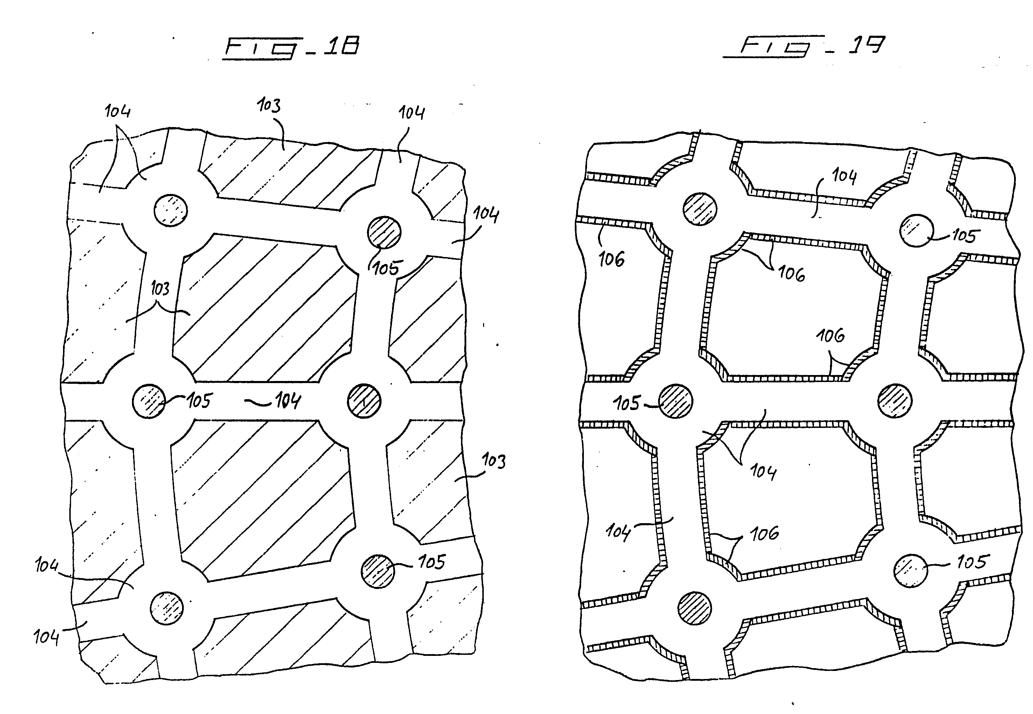

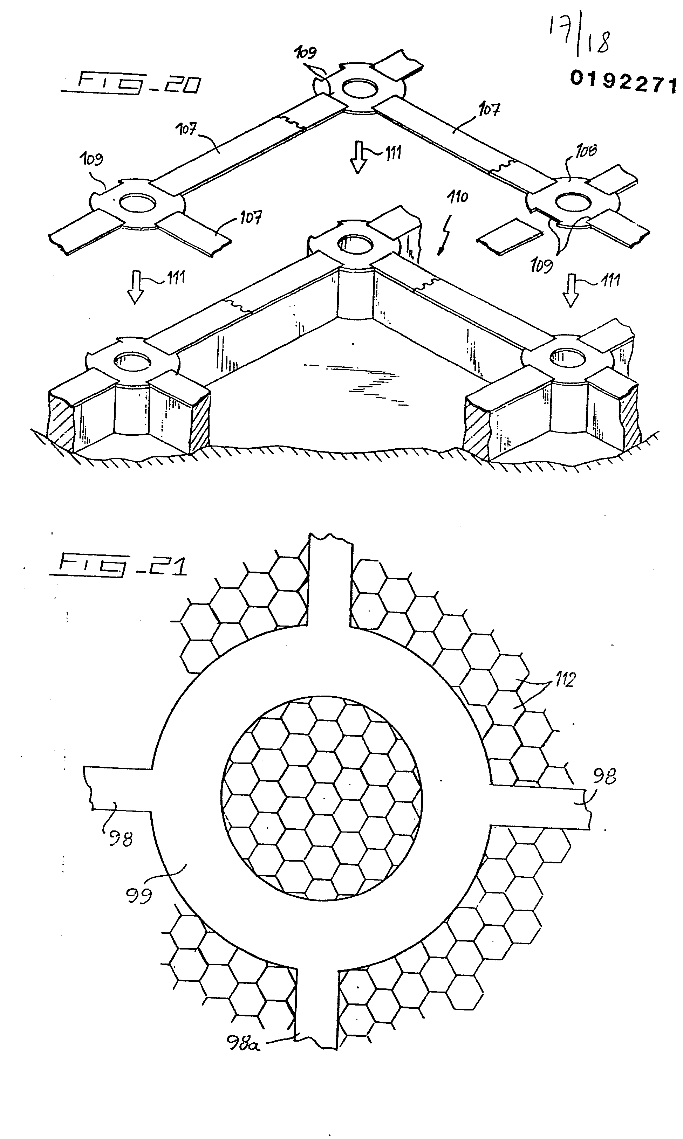

Anhand der Fig. 14 wird der Herstellungsvorgang für den Reflektorkörper im folgenden erläutert. Zunächst einmal wird die Vorrichtung
18a aufgebaut. Dann werden alle Zellenkörper Bodenöffnungen 70
mit Ausnahme jener für die Hydraulikstempel 71 abgedeckt. Über
die Öffnungen 70 für die Hydraulikstempel wird ein Schutzrohr
85 gesetzt, dessen Höhe der Unterkante des zu erzeugenden
Reflektorkörpers entspricht (s. Fig. 15). Die Schutzrohre 85
sollen die Hydraulikstempel 71 schützen. Vor dem Aufstellen der
Schutzrohre werden die 42 Hydraulikstempeleinheiten 72 montiert
und am  Zellenkörperunterboden 69 befestigt. Das Zellenkörperinnere und die Oberfläche der Schutzrohre wird mit einer
Schutzfolie belegt. Dann erfolgt ein Befüllen des Inneren des
Zellenkörpers mit einer festgestampften trockenen Sandschicht
87. Auf die Sandschicht 87 wird eine Mörtellage 88 gebracht.
Die Oberfläche der Mörtelschicht 88 wird mit der Dreheinheit 30
durch Dreharbeiten bearbeitet zu einer aus abgesetzten konzentrischen ebenen Ringflächen bestehenden treppenartigen Kontur
entsprechend den in Fig. 14 und 15 dargestellten Absätzen 86
der unteren Reflektorkörperkontur. Die Mörtellage 88 wird am
radialen Rand mit einem Ringsteg 89 hochgezogen, wobei zwischen
Zellenkörperwandung 90 und Mörtellage 88 ein Dehnungsringspalt
91 verbleibt. Die Höhe des Mörtelringsteges 89 ist höher als
zukünftige Reflektorkörperoberfläche, die in Fig. 15 mit
gestrichelten Linien 92 angedeutet ist.

Auf die Platten 73 der Hydraulikstempel-Einheiten 72 wird eine
Stahlkugellage 93 und darauf eine Druckplatte 94 gebracht.
Anschließend werden die Druckplattenoberflächen und die Oberflächen im Innenraum der Mörtellage 88 mit einer Asbestlage 95
belegt.

Die beschriebene Anordnung ist nun bereit zur Erzeugung des
Reflektorkörpers 60. Die zu erzeugende Spiegeskörperform ergibt
sich aus den Fig. 16a, b, c und d. Fig. 16a zeigt schematisch
einen Sektor des Reflektorkörpers in der Unteransicht. Von
einem inneren Randring 62 bis zu einem äußeren Randring 96 sind
nach einem bestimmten Strukturschema zahlreiche Löcher 97 für
die axiale Unterstützung des Reflektorkörpers vorgesehen. Die
Fig. 16b zeigt ein Detail C aus Fig. 16a. Vom inneren Randring
62a erstrecken sich radial Rippen 98, die von zylindrischen
Rippenkörpern 99 unterbrochen werden, die die Löcher 97 bilden.
Zwischen den zylindrischen Rippenkörpern 99 sind Querrippen 98a
angeordnet. In Fig. 16c erkennt man schematisch einen Reflektorkörper 60 mit Zentralöffnung 62, die einen Durchmesser von 3,5
m hat während der Durchmesser des Reflektorkörpers 20 m beträgt.
Die dicke des Reflektorkörpers soll 800 mm betragen. Die
Details A und B in Fig. 16c werden in Fig. 16d im Teilschnitt
dargestellt. Zu erkennen ist die Reflektorkörper-Deckplatte
100, von der sich nach unten die zylindrischen Ringrippen-Stützkörper 99 und die Rippen 98 und 98a erstrecken. In der Reflektorkörper-Deckplatte sind Wäremtauscherrohre 101 angeordnet, deren
Verlauf in der Draufsicht aus Fig. 16e schematisch erkennbar
ist.
In Fig. 17 ist schematisch eine Draufsicht auf den Reflektorkörper 60 gezeichnet, wobei die Kreuze 102 angeben, an welchen
Stellen die Montagestützen bzw. die Hydraulikstempel-Einheiten
72 angreifen sollen.

Für die Herstellung des Reflektorkörpers 60 werde zunächst
Keramikplatten 103 nebeneinander gelegt, deren  Form so gewählt
ist, daß sich gemäß Fig. 18 Freiräume 104 für die Rippen 98 und
98a sowie dür die zylindrischen Rippenkörper 99 ergeben.
Demgemäß werden in die Mitte der Freiräume 104 für den zylindrischen Ringrippenkörper 99 Keramikscheiben 105 gelegt. Anstelle der Keramikplatten können auch Keramikstegelemente 106 gemäß Fig. 19 benutzt werden.

Nachdem die beschriebenen Hilfsmittel ausgelegt worden sind, werden in Serie hergestellte vorzugsweise gestanzte Plättchen aus Metall von etwa 1 mm Dicke in die Freiräume 104 gelegt. Für das beschriebene Beispiel entspricht die Form der Plättchen der Form der Freiräume 104 und im Falle der zylindrischen Ringrippen werden ausgestanzte plättchenförmige Ringscheiben 108 verwendet. Zweckmäßigerweise ist vorgesehen, daß die Stegplättchen 107 mit den Ringscheiben 108 formschlüssige Anschlüsse bilden. Beispielsweise kann das Ende eines Stegplättchens 107 in eine entsprechende Ausnehmung 109 des Ringplättchens ragen. Fig. 20 zeigt derartige Anordnungen. Die Plättchenabmessungen werden so variiert, daß jeweils die Stoßstellen der unteren Lage überdeckt und die Stoßstellen an den Rippenenden verzahnt sind (formschlüssiges Ineinandergreifen, z.B. durch Nut und Feder).

Nach dem vErlegen einer kompletten Plättchenlage erfolgt die Verschmelzung der Elemente untereinander und mit der Unterschicht durch Einsatz einer Umschmelzeinheit 29 in radialer und tangentialer Arbeitsrichtung. In Fig. 20 erkennt man unten bereits einen Sockel 110 eines Rippenkörpers, auf dem sich eine neue Plättchenlage befindet, die verschmolzen werden soll. Die Pfeile 111 deuten an, wie die Plättchenlage aufgelegt worden ist. Dabei sind wegen der besseren Übersichtlichkeit die Hilfsmittel, d.h. die Keramikplatten bzw. Keramikstegelemente nicht abgebildet worden. Durch geeignete Unterlagen werden die Keramikplatten bzw. Keramikstegelemente nach und nach höher gelegt, bis die volle Höhe der Rippenstruktur erzeugt ist. Zur Annäherung an die untere Kontur der Reflektorkörper-Deckplatte 100 werden in den oberen Lagen des Rippenkörpers die zu verschmelzenden Plättchen 107, 108 in ihren Grundformen zwar beibehalten, aber so abgeändert, daß die treppenartigen Über-

gänge der Rippenkörperstruktur in radialer Richtung bestmöglich
ausgeglichen werden. Diese Arbeit wird zweckmäßigerweise so
durchgeführt, daß vor dem Aufbringen dieser Ausgleichslagen die
Keramikplatten eine an die unteres Reflektorkörper-Deckplattenkontur angepaßten Mörtelauflage erhalten.

Falls erforderlich, kann der Rippenkörper thermisch und mechanisch behandelt werden. Es ist beispielsweise möglich, den
Rippenkörper induktiv zu glühen, die Rippenflächen, die Löcher
97 für die Reflektorkörperunterstützung und die Zentralöffnung
62 des Reflektorkörpers 60 spanabhebend zu bearbeiten und in
die Unterstützungslöcher 97 Hülsen einzusetzen.

Danach wird die Deckplatte hergestellt. Vor Beginn des Aufbaus
der Deckplatte wird die Rippenkörperstruktur zweckmäßigerweise
überdreht mit der Dreheinheit 30. Ausgehend vom inneren Randring 62a (Fig. 16b) der Spiegelzentralöffnung 62 werden die
Keramikplatten vollständig zunächst mit einer 1 mm dicken
Asbestschicht belegt und diese sodann mit etwa 1 mm dicken
Metallplättchen beispielsweise hexagonaler Form mit etwa 25 mm
Diagonallänge beschichtet. Fig. 21 verdeutlicht diesen Aufbau
mit den Metallplättchen 112. Die Keramikplatten sind dabei so
zu justieren, daß eine möglichst absatzfreie, die sphärische
Form des Spiegels bestmöglich angeneäherte Fläche entsteht.
Nunmehr werden die hexagonalen Metallplättchen 112 von innen
nach außen ringweise verschmolzen mit der Umschmelzeinheit 29,
und zwar sowohl untereinander als auch mit der Rippenstruktur.
Auf die so entstandene durchgehende metallische Fläche wird nun
wie beim oben beschriebenen ersten Ausführungsbeiepiel die
Reflektorkörper-Deckplatte 100 durch schichtweises Aufbringen
von Auftragsschweißlagen aus Elektrodenmaterial mit 5 mm
Durchmesser erzeugt und zwar mit der Auftragsschweißeinheit 25.
Zwischendurch erfolgt das Einlegen des vorgefertigten Rohrschlangensystems mit den Rohren 101, dessen Außenwandung mit dem Deckplattenmaterial unter Verwendung der Umschmelzeinheit verschmolzen wird.

Der Reflektorkörper, der auf diese Weise hergestellt worden ist, erhält seine sphärische Reflektorflächenform durch ein erstes Vordrehen mit der Dreheinheit 29. Etwaige lokale porige STellen der Oberfläche können durch Ausbohren und Kaltschweißen ausgebessert werden. Danach wird die endgültige Spiegelflächenkontur durch Feindrehen erzeugt. Vor diesem letzten Arbeitsgang der Reflektorkörperfertigung ist es erforderlichenfalls möglich, den gesamten Körper induktiv zu glühen. Die Spiegeloberfläche kann nunmehr beliebig weiterbearbeitet werden, beispielsweise durch optisches Schleifen, durch Laserhärtung, durch Beschichtung (beispielsweise Plattieren, Aufsprühen, elektrolytisches Beschichten usw.). Diese Arbeiten können ganz oder teilweise aber auch nach dem Ausräumen des Zellenkörpers durchgeführt werden. Zu diesem Zweck wird der Reflektorkörper 60 von seiner Unterlage mittels der Hydraulikstempel-Einheiten 72 um etwa 1 m angehoben. Nunmehr können aus dem Zellenkörperraum alle Hilfsstoffe (Keramikplatten, Mörtel, Sand, Schutzrohre, Asbestlagen usw.) vollständig entfernt werden. Die weitere Bearbeitung der Slpiegeloberfläche kann dann entweder auf den Montagestützen oder aber nach dem Einbau des Spiegelunterstützungssystems (nicht dargestellt) auch auf diesem selbst oder auf anderen provisorischen mechanisch, pneumatisch oder hydraulisch arbeitenden Unterstützungssystemen durchgeführt werden.

Das erfindungsgemäße Herstellungsverfahren ist gewerblich anwendbar, denn es gibt zahlreiche Methoden und Einrichtungen, welche es gestatten, die beispielhaft aufgeführten und auch andere Verbindungsverfahren für die jeweils gewünschte Materialart zu realisieren. Die nach dem erfindungsgemäßen Verfahren hergestellten Reflektorkörper oder Zellenkörper sind einsetzbar für den gewerblichen Bau einer Vielzahl von für wissenschaftliche, technische und militärische Zwecke, terrestrisch oder
extraterrestrisch zu nutzenden Geräten.

Das erfindungsgemäße, nur für die Fabrikation von Reflektor-
oder Zellenkörpern der genannten Geräte beanspruchte Herstellungsverfahren kann ferner gewerblich angewendet werden für die
Erzeugung beliebiger anderer Komponenten, bevorzugt für solche
mit höchsten Qualitätsanforderungen hinsichtlich ihrer Homogenität.

Mit der Vorrichtung 18a nach Fig.14 können nach dem beispielhaft beschriebenen Verfahren auch die Gabel 55 und/oder der
Zentralringkörper 58 und/oder der Zellenkörper 59 im Teleskopgebäude selbst hergestellt werden, bevor der Reflektorkörper 60
in situ hergestellt wird.

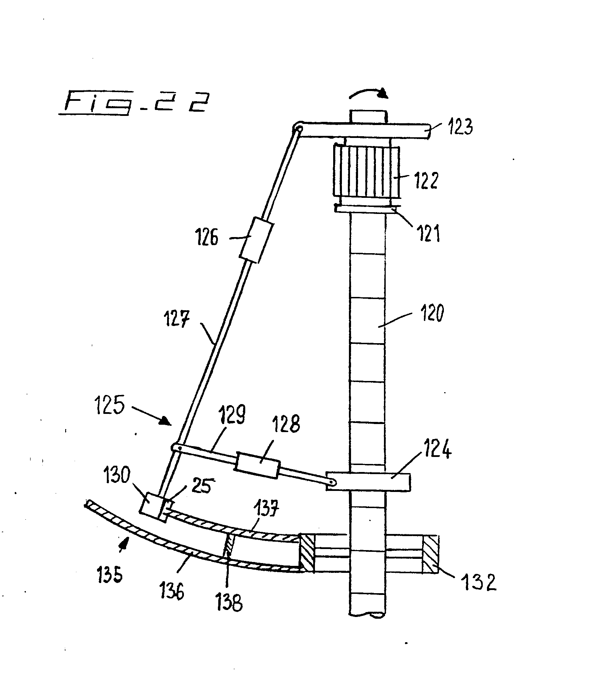

Für die extraterrestrische Herstellung von Reflektorkörpern
eignet sich die in Fig. 22 schematisch dargestellte Vorrichtung. Sie besteht aus einer aus mehreren Abschnitten zusammengesetzten Säule 120, an deren oberen Ende ein auf einen Flansch
121 abgestützter, mit variabler Drehzahl antreibbarer Motor 122
befestigt ist, der als Drehantrieb eines an einem Drehkranz 123
und an einem weiteren, mit Abstand unterhalb des Motors 122 an
der Säule 120 oberhalb deren unteren Endes vorgesehenen Drehkranzes 124 angelenkten Gestängerahmens 125 dient. Dieser
umfaßt eine am Drehkranz 123 angelenkte längere, mittels eines
Stepmotors 126 längenveränderliche Tragstange oder -doppelstange
127 und eine oberhalb ihres unteren Endes angreifende kürzere,
mittels eines weiteren Stepmotors 128 längenveränderliche, am
weiteren Drehkranz 124 angelenkte Führungsstange oder -doppelstange 129. Am unteren, freien Ende der Tragstange 127 ist ein
Werkzeughalter 130 angebracht, an welchem zur Erzeugung des
Reflektorkörpers 135 verschiedene Arbeitseinheiten, etwa
solche, wie sie anhand der Fig. 6a bis 6e beschrieben sind,
auswechselbar befestigt werden können. Hier ist eine Auftragsschweißeinhheit 25 gemäß Fig. 6a befestigt. Am unteren Ende der Säule 120 wird oberhalb deren nicht dargestellter Verankerung, z.B. in einer Raumstation, ein vorgefertigter zentraler Starterring 132 befestigt, der durch erfindungsgemäße Einbindung von Baustoffkörpern, beispielsweise durch eine Auftragsschweißeinheit gemäß Fig. 6a, längs des Umfangs stetig vergrößert wird, bis in radialer Richtung die gewünschte Größe des Reflektorkörpers 135 erreicht ist. Dabei werden durch die Stepmotoren 126 und 128 die Längen der Tragstange 127 und der Führungsstange 129 derart gesteuert, daß die gewünschte asphärische, z.B. parabolische Oberflächenform des Reflektorkörpers 135 so erzeugt wird, daß nur geringe Nacharbeitungen erforderlich sind, bevor sich die Endbearbeitung, z.B. die optische Endbearbeitung der Reflektoroberfläche anschließt. Der Reflektorkörper 135 kann beispielsweise zweischalig, wie dargestellt, erzeugt werden. In bestimmter Anordnung und gewünschten Abständen können zwischen den beiden Schalen 136 und 137 Stege 138 aufgebaut werden.

Wird der Reflektorkörper durch Auftragsschweißen erzeugt, kann dies in der Weise durchgeführt werden, daß das Schweißelektrodenmaterial nur auf die Stirnfläche der Schalen aufgetragen wird oder derart, daß streifenförmiges Material mit der Stirnfläche verschweißt wird.

Beim Auftragsschweißen wird als ein Baustoffkörper im Sinne der Erfindung etwa der Bereich der Schweißstelle oder des Schweißbades angesehen.

Die in Fig. 22 dargestellte Vorrichtung kann ferngesteuert, z.B. von der Erde aus, betrieben werden.

1052

WUESTHOFF - v. PECHMANN - BEHRENS - GOETZ
EUROPEAN PATENT ATTORNEYS

DR. PHIL. FRED.. WUESTHOF. (19-, 1919)
DIPL.-ING. GERHARD PULS (1952-1971)
DIPL.-CHEM. DR. FRED. VON PECHMANN
DR.-ING. DIETER BEHRENS
DIPL.-ING. DIPL.-WIRTSCH.-ING. RUPERT GOETZ
DIPL.-PHYS. DR. AXEL VON HELLFELD

D-8000 MÜNCHEN 90
SCHWEIGERSTRASSE 2

TELEFON: (089) 66 20 51
TELEGRAMM: PROTECTPATENT
TELEX: 524070
TELEFAX: (089) 66 39 36 (III)

EP-60 166
ESO, 8046 Garching

Patentansprüche :

1. Monolithischer Reflektorkörper großer Bauart eines, insbesondere astronomischen, Spiegelteleskops, aus einer Vielzahl miteinander starr verbundener Baustoffkörper bzw. Einzelelemente,
gekennzeichnet durch
eine Vielzahl nacheinander zusammengesetzter kleiner Baustoffkörper (51; 53a; 107, 108; 112), deren Masse jeweils weniger als $10^{-4}$, insbesondere weniger als $10^{-6}$, des monolithischen Reflektorkörpers(1, 60, 135) beträgt.

2. Reflektorkörper nach Anspruch 1,
dadurch gekennzeichnet ,
daß der Reflektorkörper (1, 60) aus Baustoffkörpern gleicher oder unterschiedlicher Materialien, insbesondere zur Erzeugung unterschiedlicher Homogenitäten, hergestellt ist.

3. Reflektorkörper nach Anspruch 1 oder 2,
dadurch gekennzeichnet ,
daß die Baustoffkörper aus Metall, Glas, Keramik oder Kunststoff bestehen.

4. Reflektorkörper nach Anspruch 3,
dadurch gekennzeichnet ,
daß die Baustoffkörper Metallblechplättchen sind, die insbesondere Passungen an den Stoßstellen, an denen sie aneinanderstoßen, wie Nut und Feder, aufweisen.

5.  Reflektorkörper nach Anspruch 3,
dadurch gekennzeichnet,
daß er aus Schweißnähten bzw. Schweißsträngen aufgebaut ist.


6.  Verfahren zur Herstellung eines Reflektorkörpers großer
Bauart eines, insbesondere astronomischen, Spiegelteleskops aus
einer Vielzahl miteinander verbundener Baustoffkörper bzw.
Einzelelemente, insbesondere nach einem oder mehreren der
Ansprüche 1 bis 4,
dadurch gekennzeichnet,
daß Reflektorkörper, deren Masse jeweils $10^{-4}$, insbesondere
$10^{-6}$ der Masse des Reflektorkörpers nicht übersteigt, nacheinander zusammengetragen und gleichzeitig oder nacheinander
mit den jeweils benachbarten Baustoffkörpern verbunden werden.


7.  Verfahren nach Anspruch 6,
dadurch gekennzeichnet,
daß die Baustoffkörper mittels Sprühen, insbesondere mittels
Flammspritzen oder Plasmasprühen, zusammengetragen und -gesetzt,
miteinander durch Plattieren verbunden, miteinander verschweißt,
miteinander versintert, nacheinander miteinander verschmolzen,
insbes. durch Legierungsbildung miteinander verschmolzen, miteinander verlötet oder miteinander verklebt werden.


8.  Verfahren nach einem oder mehreren der Ansprüche 6 oder 7,
dadurch gekennzeichnet,
daß verschalte Räume aufgebaut werden, die zumindest Teile der
Konturen des Reflektorkörpers aufweisen, und daß die Baustoffkörper in den Verschalungsräumen zusammengetragen und -gesetzt
werden.


9.  Verfahren nach Anspruch 8,
dadurch gekennzeichnet,
daß für die Baustoffkörper, insbesondere bei Verwendung von
solchen aus Metall, eine aus Keramikplatten aufgebaute Verschalung verwendet wird.

10. Verfahren nach einem oder mehreren der Ansprüche 6 bis 9,
dadurch  g e k e n n z e i c h n e t ,
daß der Reflektorkörper am Aufstellungsort und/oder in situ
hergestellt wird.

11. Vorrichtung zur Durchführung des Verfahrens nach einem
oder mehreren der Ansprüche 6 bis 10,
g e k e n n z e i c h n e t   durch
einen aufrechtstehenden Ständer (18) und einem daran lagernden
und um dessen Achse schwenkbaren, im wesentlichen horizontal
ausgerichteten Kragarm (19), unter dem ein insbesondere stufenlos NC-gesteuerter Werkzeughalter (20) zur auswechselbaren
Aufnahme von Arbeitseinheiten (25, 29, 30, 31) befestigt ist.

12. Vorrichtung nach Anspruch 11,
dadurch  g e k e n n z e i c h n e t ,
daß im Bereich unter dem Kragarm (19) auf einem Fundament (24)
eine Drehscheibe (23) für die Herstellung eines Reflektorkörpers um eine vertikale Achse drehbar gelagert ist.

13. Vorrichtung nach Anspruch 11 oder 12,
dadurch  g e k e n n z e i c h n e t ,
daß die Arbeitseinheit eine Auftragsschweißeinheit (25) mit
einem Auftragsschweißautomaten (32), einer Vorwärmvorrichtung (26), einer Nachwärmvorrichtung (27) und einem Schweißmaterialvorratsbehälter (28) ist, eine Umschmelzeinheit (29)
mit einem Umschmelzautomaten (33), einer Vorwärmvorrichtung
(26) und einer Nachwärmvorrichtung (27) oder eine Dreheinheit
(30) oder Fräseinheit (31) mit einer Einrichtung zur spanabhebenden Bearbeitung ist.

14. Vorrichtung nach Anspruch 11,
g e k e n n z e i c h n e t   durch
einen Betonblockkörper (35) unter dem Schwenkbereich des
Kragarms (19), insbesondere mit einer zentralen Öffnung (38),
mit einer konvex oder konkav gekrümmten oberen Feinschicht
(36) zum Aufbau des Reflektorkörpers.

15.  Verfahren nach Anspruch 6 unter Verwendung einer Vorrichtung nach Anspruch 11,

dadurch  g e k e n n z e i c h n e t ,

daß auf die Drehscheibe (23) ein runder Betonblockkörper (35) mit konvexer Krümmung gesetzt wird, anschließend die Bodenfläche des Betonblockkörpers (35) unter Belassung einer Zentralöffnung mit einer Lage Kugeln belegt wird, mittels einer Umschmelzeinheit (29) die Kugellage zu einer Schicht (51a) umgeschmolzen wird, danach der Reflektorkörper durch Aufbringen von aus Drahtmaterial kontinuierlich erzeugten Auftragsschweißlagen (53) mittels einer Auftragsschweißeinheit (25) gefertigt wird, im Anschluß daran mit der Umschmelzeinheit (2) die oberste Auftragsschweißlage umgeschmolzen und dann eine spanabhebende Fertigbearbeitung der zukünftigen Spiegelunterseite durch Dreharbeit mit einer Dreheinheit (30) und Fräsarbeit mit einer Fräseinheit (81) für Vertiefungen zur Aufnahme von Angriffseinrichtungen für astatische Hebel (8) für die Reflektorkörperunterstützungen erfolgt, woraufhin ein Umsetzen des rohen Reflektorkörpers (1) auf einen Betonblockkörper (35) erfolgt, der auf die Drehscheibe (23) gesetzt wird, danach die Schicht (51a) mit der Dreheinheit (30) abgedreht und die reflektierende Fläche des Reflektorkörpers (60) sowie die Zentralöffnung und die zylindrische Mantelfläche spanabhebend fertig bearbeitet werden.

16.  Verfahren nach Anspruch 6 unter Verwendung einer Vorrichtung nach Anspruch 11,

dadurch  g e k e n n z e i c h n e t ,

daß die Herstellung des Reflektorkörpers (60) in einem Zellenkörper (59) in situ erfolgt, wobei das Azimutlager (52), die Gabel (55), der Zentralringkörper (58) und der Zellenkörper (59) des Teleskops bereits fertiggestellt und montiert sind und auf einem Teleskopsockel (53) die Vorrichtung (18a) nach Anspruch 20 aufgestellt wird, deren Ständer (18) zentrale Öffnungen (62, 63, 64) des Reflektors (64), des Zellenkörpers (59) und der Gabel (55) frei durchgreift und in den Zentralringkörper (58) ragt, und daß im Bereich des Reflektorkörpers zunächst eine Mörtellage (88) mit einer Asbestlage (95) hergestellt wird, auf welche zunächst Keramikplatten (103) nebeneinander gelegt werden, deren Form so gewählt ist, daß sich Freiräume (104) für die Kontur des Reflektorkörpers ergeben, und daß danach vorgestanzte Plättchen aus Metall von etwa 1 mm Dicke in die Freiräume (104) gelegt und die Plättchen nacheinander, wenn eine komplette Plättchenlage vorliegt, miteinander sowie gegebenenfalls mit einer bereits gebildeten Unterschicht verschmolzen werden, wonach nach Erstellung dieses Reflektor-Rohkörpers eine Reflektorkörper-Deckplatte (100) hergestellt wird, nachdem zunächst der Rohkörper zweckmäßigerweise überdreht wird, anschließend ausgehend von einem Randring (62a) der Spiegelzentralöffnung (62) die Keramikplättchen vollständig zunächst mit einer 1 mm dicken Asbestschicht belegt und diese dann mit etwa 1 mm dicken Metallplättchen, beispielsweise hexagonaler Form mit etwa 25 mm Diagonallänge, beschichtet werden, nunmehr die hexagonalen Metallplättchen von innen nach außen ringweise verschmolzen werden, auf die so entstandene durchgehende metallische Fläche die Reflektorkörper-Deckplatte (100) durch schichtweises Aufbringen von Auftragsschweißlagen aus Elektrodenmaterial, mit insbesondere 5 mm Durchmesser, erzeugt wird, wobei gegebenenfalls zwischendurch das Einlegen eines vorgefertigten Rohrschlangensystems erfolgt, dessen Außenwandung mit dem Deckplattenmaterial vorzugsweise verschmolzen wird und danach die sphärische Reflektorfläche des Reflektor-Rohkörpers durch ein erstes Vordrehen und anschließendes Feindrehen erzeugt wird.

17. Verfahren nach Anspruch 16 zur Herstellung eines Zellenkörpers (59) mit im Zellenboden angeordneten Löcherns (70), die jeweils von einer Kolbenstange (71) an einer Hydraulikstempel-Einheit (72) durchgriffen werden, wobei am oberen Ende der Kolbenstange (71) eine Platte (73) sitzt, die Hydraulikstempel-Einheiten (72) von unten am Zellenboden (69) befestigt sind und die Hydraulikstempel-Einheiten (72) über Hydraulikleitungen (76) mit einem Hydrauliksatz (77) in Verbindung stehen,

dadurch    g e k e n n z e i c h n e t ,
daß eine Zentralöffnung (63) im Zellenkörper (59) mit einer
axial sich vom Boden (69) nach oben erstreckenden Ringwandung
(78) versehen wird, und daß danach bei allen Zellen die Bodenöffnungen (70) mit Ausnahme jener für die Hydraulikstempel (71)
abgedeckt werden, über die Löcher (70) für die Hydraulikstempel
ein Schutzrohr (85) gesetzt wird, dessen Höhe der Unterkante
des zu erzeugenden Reflektorkörpers entspricht, vor dem Aufstellen der Schutzrohre (85) die Hydraulikstempel-Einheiten (72)
montiert und am Zellenkörperunterboden (69) befestigt werden,
das Zellenkörperinnere und die Oberfläche der Schutzrohre (85)
mit einer Schutzfolie belegt werden, dann ein Befüllen des
Inneren des Zellenkörpers mit einer festgestampften trockenen
Sandschicht erfolgt, auf die Sandschicht (87) eine Mörtellage
(88) gebracht, die Oberfläche der Mörtellage zu einer aus abgesetzten konzentrischen ebenen Ringflächen bestehenden treppenartigen Kontur bearbeitet und am radialen Rand mit einem Ringsteg (89) hochgezogen wird, wobei zwischen Zellenkörperwandung
(90) und Mörtellage (88) ein Dehnungsringspalt (91) verbleibt,
auf die Platten (73) der Hydraulikstempel-Einheiten (72) eine
Stahlkugellage (93) und darauf eine Druckplatte (94) gebracht
wird und anschließend die Druckplattenoberflächen und die
Oberflächen im Innenraum der Mörtellage (88) mit einer Asbestlage (95) belegt werden.

18. Verfahren nach Anspruch 6 zur extraterrestrischen in-situ
Herstellung eines Reflektorkörpers, nach Anspruch 1, 2 oder 3,
dadurch    g e k e n n z e i c h n e t ,
daß auf die Umfangsfläche eines eine Zentralöffnung des Reflektorkörpers (135) umschließenden Rings (132) durch Auftragsschweißung oder durch Aufschweißen von Flächenmaterialstreifen
dieser, insbesondere spiralförmig, bis zur Erzielung des erwünschten Durchmessers des Reflektorkörpers formgerecht vergrößert wird.

19. Vorrichtung zur Durchführung des Verfahrens nach
Anspruch 18,

g e k e n n z e i c h n e t     durch

einen auf einer Säule (120) drehantreibbar gelagerten Gestängerahmen (125) aus einer nahe dem oberen Ende der Säule (120)
angelenkten, längenveränderlichen Tragstange (127) und einer
oberhalb des unteren Endes der Säule (120) angelenkten, längenveränderlichen Führungsstange (129)
und durch einen am unteren Ende der Tragstange (127) vorgesehenen Werkzeughalter (130) zur auswechselbaren Befestigung von
Arbeitseinheiten (25, 29, 30, 31), insbesondere einer Auftragsschweißeinheit (25).

1052

FIG - 1

0192271

1/18

FIG_2a

FIG_2c    FIG_2d

FIG - 3

17   1   16   17

FIG - 4

17

16

1

17

_FIG _ 5_

19

18a

18

20

22    21

23a

23

24

_FIG _ 6a_

26                    28

34

32

25                    27

_FIG _ 6b_

26

34

33

29                    27

_FIG _ 6c_

34

30

_FIG _ 6d_

34

31

FIG - 7a

FIG - 7b

FIG - 8

FIG - 9

FIG - 10a

18a

18

19

20

51    43
40    39
44    51    48
37    49
43  47  38  35    23

FIG - 10b

18a

18

19

20

25

39    53a
17    44
51a    48
37    51a
43    38    35    23

FIG - 10c

FIG - 10d

FIG - 11

_FIG_.12

FIg_13

FIG-14

FIG - 15

FIG - 16 a

C

97

96

62    54

FIG - 16 b

60

98a    97

99

98    98

62

98a    62a

99

98    97

98

FIG - 16c

FIG - 16d

FIG - 16e

101

54
62

101

60

FIG - 17

102

102

102

102

60

FIG_18

FIG_19

_FIG_-20

109

107

109

107

111

110

111

109

108

109

111

_FIG_-21

112

98

98

99

98a

FIG.22